(19) Europäisches Patentamt

European Patent Office

Office européen des brevets

(11) **EP 4 369 847 A1**

(12) # EUROPEAN PATENT APPLICATION
published in accordance with Art. 153(4) EPC

(43) Date of publication:
**15.05.2024 Bulletin 2024/20**

(21) Application number: **22852126.6**

(22) Date of filing: **01.08.2022**

(51) International Patent Classification (IPC):
**H04W 76/15** (2018.01)

(52) Cooperative Patent Classification (CPC):
**H04L 69/06; H04L 69/22; H04W 76/15;
H04W 84/12**

(86) International application number:
**PCT/CN2022/109459**

(87) International publication number:
**WO 2023/011414 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.08.2021 CN 202110877640**

(71) Applicant: **Huawei Technologies Co., Ltd.
Shenzhen, Guangdong 518129 (CN)**

(72) Inventors:
• **GUO, Yuchen
Shenzhen, Guangdong 518129 (CN)**
• **LI, Yiqing
Shenzhen, Guangdong 518129 (CN)**
• **HUANG, Guogang
Shenzhen, Guangdong 518129 (CN)**
• **LI, Yunbo
Shenzhen, Guangdong 518129 (CN)**
• **GAN, Ming
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RADIO-FRAME SENDING METHOD AND APPARATUS, AND RADIO-FRAME RECEIVING METHOD AND APPARATUS**

(57) This application provides radio frame sending and receiving methods and apparatuses. The radio frame sending method including: generating and sending a radio frame. The radio frame includes one first element, and further includes at least one of a second element and a third element. Information with a total length of L octets is carried in a first information field of the first element, and is further carried in at least one of a second information field of the second element and a third information field of the third element. A length of information carried in the first information field is K octets. A length of information carried in the second information field is obtained by subtracting a sum of a quantity of octets of a second indication field and a second indication subfield, from a quantity of octets of a second information portion. A length of information carried in the third information field is obtained by subtracting the length of the information carried in the first information field from the total length of L octets; or then subtracting the length of the information carried in the second information field. This application is applied to a wireless local area network system supporting a next-generation Wi-Fi protocol of the IEEE 802.11ax, for example, the 802.11 series protocols such as the 802.11be or the EHT.

FIG. 9

**Description**

**TECHNICAL FIELD**

This application relates to the field of wireless local area network (wireless local area network, WLAN) technologies, and in particular, to a radio frame sending method and apparatus, and a radio frame receiving method and apparatus.

**BACKGROUND**

With the development of wireless technologies, in a process of communication between devices, one device may send a radio frame including an element (element) to another device, and the element may be used to carry information about the device. A maximum length of information carried in one element is fixed, and the maximum length is configured by a length (Length) field in the element.

However, when a length of to-be-transmitted information is relatively large, the length of the information carried by the element may be greater than the maximum length configured for the element. As a result, the element cannot carry the information about the device (a single-link device or a multi-link device), causing a transmission failure of the radio frame and affecting communication efficiency.

**SUMMARY**

Embodiments of this application provide a radio frame sending method and apparatus, and a radio frame receiving method and apparatus.

According to a first aspect of this application, a radio frame sending method is provided. The method includes:

generating a radio frame, where the radio frame includes one first element, and further includes at least one of a second element and a third element;

the first element includes a first length field and a first information portion following the first length field, the first information portion includes a first indication field and a first subelement, and the first subelement includes a first indication subfield and a first information field;

the second element includes a second length field and a second information portion following the second length field, the second information portion includes a second indication field and a second subelement, and the second subelement includes a second indication subfield and a second information field;

the third element includes a third length field and a third information portion following the third length field, the third information portion includes a third indication field and a third subelement, and the third subelement includes a third indication subfield and a third information field;

information with a total length of L octets to be sent in fragments is carried in the first information field, and is further carried in at least one of the second information field and the third information field;

a length of information carried in the first information field is K octets;

a length of information carried in the second information field is obtained by subtracting X octets, namely a sum of a quantity of octets of the second indication field and the second indication subfield, from a quantity of octets of the second information portion; and

a length of information carried in the third information field is obtained by subtracting K octets, namely the length of the information carried in the first information field, from the total length of L octets; or

a length of information carried in the third information field is obtained by subtracting K octets, namely the length of the information carried in the first information field, from the total length of L octets, and then subtracting the length of the information carried in the second information field; and

sending the radio frame.

According to a second aspect of this application, a radio frame receiving method is provided. The method includes:

receiving a radio frame, where the radio frame includes one first element, and further includes at least one of a second element and a third element;

the first element includes a first length field and a first information portion following the first length field, the first information portion includes a first indication field and a first subelement, and the first subelement includes a first indication subfield and a first information field;

the second element includes a second length field and a second information portion following the second length field, the second information portion includes a second indication field and a second subelement, and the second subelement includes a second indication subfield and a second information field;

the third element includes a third length field and a third information portion following the third length field, the third information portion includes a third indication field and a third subelement, and the third subelement includes a third indication subfield and a third information field;

information with a total length of L octets to be sent in fragments is carried in the first information field, and is further carried in at least one of the second information field and the third information field;

a length of information carried in the first information field is K octets;

a length of information carried in the second information field is obtained by subtracting X octets, namely a sum of a quantity of octets of the second indication field and the second indication subfield, from a quantity of octets of the second information portion; or in other words, the length of the information carried in the second information field is obtained by subtracting X octets, namely the sum of the quantity of octets of the second indication field and the second indication subfield, from a quantity of octets indicated by the second length field; and it should be understood that, in an implementation, a value of the second length field is 255, indicating that the quantity of octets of the second information portion is 255; and

a length of information carried in the third information field is obtained by subtracting K octets, namely the length of the information carried in the first information field, from the total length of L octets; or

a length of information carried in the third information field is obtained by subtracting K octets, namely the length of the information carried in the first information field, from the total length of L octets, and then subtracting the length of the information carried in the second information field; and

obtaining, based on the radio frame, the information with the total length of L octets sent in fragments.

In an implementation of the first aspect or the second aspect of this application, the information to be sent in fragments is an information portion/a data portion of one information element, and the length of the information portion/data portion is L octets. The L octets do not include a length of an element ID field, a length field, or a length of an element ID extension field of the information element. In an implementation, the information element is a multi-link element (multi-link element). In another implementation, the information element is all fragmentable elements (fragmentable elements) defined in the 802.11 standard.

In an implementation of the first aspect or the second aspect of this application, the first subelement is an information element, and each of the second subelement and the third subelement is a fragment element.

In another implementation of the first aspect or the second aspect of this application, the first subelement includes an element identifier element ID. Each of the second subelement and the third subelement includes an element ID, and a value of the element ID is 242, indicating that each of the second subelement and the third subelement is a fragment information element.

In another implementation of the first aspect or the second aspect of this application, a value of the first length field is 255, indicating that a length of the first information portion is 255 octets. A length of the first indication field is A1 octets, a length of the first indication subfield is A2 octets, and the length K of the information carried in the first information field is 255-A1-A2 octets.

In another implementation of the first aspect or the second aspect of this application, a value of the second length field is 255, indicating that the length of the second information portion is 255 octets. The length of the second indication field is X1 octets, the length of the first indication subfield is X2 octets, and the length of the information carried in the second information field is (255-X1-X2) octets, where X1+X2=X.

In another implementation of the first aspect or the second aspect of this application, a quantity of second elements

$$M = \left\lfloor (L-K) / \left( \begin{array}{l} \text{Length of a second information portion indicated} \\ \text{by a second length indication field} - X \end{array} \right) \right\rfloor,$$

where $\lfloor \ \rfloor$ represents rounding down.

In an implementation, $M = \left\lfloor (L-K) / (255-X) \right\rfloor$

In another implementation of the first aspect or the second aspect of this application, a quantity of third elements

$$N = \begin{cases} 1, \text{ if } (L-K) \bmod \left( \begin{array}{l} \text{Length of a second information portion indicated} \\ \text{by a second length indication field} - X \end{array} \right) > 0 \\ 0, \text{ else} \end{cases},$$

or

$$N = \begin{cases} 0, \text{ if } (L-K) \bmod \left( \begin{array}{l} \text{Length of a second information portion indicated} \\ \text{by a second indication field} - X \end{array} \right) = 0 \\ 1, \text{ else} \end{cases}.$$

In an implementation,

$$N = \begin{cases} 1, \text{ if } (L-K) \bmod (255 - X) > 0 \\ 0, \text{ else} \end{cases}$$

or

$$N = \begin{cases} 0, \text{ if } (L-K) \bmod (255 - X) = 0 \\ 1, \text{ else} \end{cases}.$$

In another implementation of the first aspect or the second aspect of this application, the length of the information carried in the third information field is L-K-(Length of the second information portion indicated by the second indication field-X)×M octets. In an implementation, the length is L-K-(255-X)×M octets.

In another implementation of the first aspect or the second aspect of this application, each of the first element, the second element, and the third element is a multiple BSSID element (multiple BSSID element), and X=5.

In an implementation, the length of the second indication field is X1 octets, and a value of X1 is 3. The length of the second indication subfield is X2 octets, and a value of X2 is 2.

In another implementation of the first aspect or the second aspect of this application, each of the first element, the second element, and the third element is a neighbor report element, and X=15.

A third aspect of embodiments of this application provides a communication apparatus, including at least one processor. The at least one processor is coupled to a memory, and the memory is configured to store a program or instructions. The at least one processor is configured to execute the program or the instructions, so that the apparatus performs the method according to the first aspect or any one of the possible implementations of the first aspect, or the apparatus performs the method according to the second aspect or any one of the possible implementations of the second aspect.

A fourth aspect of embodiments of this application provides a computer-readable storage medium storing one or more computer-executable instructions. When the computer-executable instructions are executed by a processor, the processor performs the method according to the first aspect or any one of the possible implementations of the first aspect, or the processor performs the method according to the second aspect or any one of the possible implementations of the second aspect.

A fifth aspect of embodiments of this application provides a computer program product (or referred to as a computer program) storing one or more computers. When the computer program product is executed by a processor, the processor performs the method according to the first aspect or any one of the possible implementations of the first aspect, or the processor performs the method according to the second aspect or any one of the possible implementations of the second aspect.

A sixth aspect of embodiments of this application provides a chip system. The chip system includes at least one processor, configured to support a communication apparatus in implementing the function in the first aspect or any one of the possible implementations of the first aspect, or configured to support a communication apparatus in implementing the function in the second aspect or any one of the possible implementations of the second aspect.

In a possible implementation, the chip system further includes a memory. The memory is configured to store program instructions and data that are necessary for the communication apparatus. The chip system may include a chip, or may include a chip and another discrete device. Optionally, the chip system further includes an interface circuit, and the interface circuit provides program instructions and/or data for the at least one processor.

A seventh aspect of embodiments of this application provides a communication system. The communication system includes the communication apparatus in the third aspect and the communication apparatus in the fourth aspect.

For technical effects brought by any implementation in the third aspect to the seventh aspect, refer to the technical effects brought by different implementations in the first aspect and the second aspect. Details are not described herein.

It can be learned from the foregoing technical solutions that the radio frame transmitted in a WLAN communication process includes the first element, the second element, and/or the third element, which are used to carry fragmented information. The fragmented information may be station information of a multi-link device. If a length of information carried by a single element is greater than a maximum length configured for the element, because the excessively long information cannot be carried, radio frame transmission fails. In comparison with this case, a radio frame transmission failure is avoided in a manner in which a plurality of elements carry information in the radio frame, and communication efficiency is improved.

## BRIEF DESCRIPTION OF DRAWINGS

FIG. 1 is a schematic diagram of a communication system according to an embodiment of this application;
FIG. 2 is a schematic diagram of multi-link association according to an embodiment of this application;
FIG. 3 is a schematic diagram of a radio frame according to an embodiment of this application;
FIG. 4 is another schematic diagram of a radio frame according to an embodiment of this application;
FIG. 5 is a schematic diagram of fragment transmission according to the 802. 11ai;
FIG. 6 is another schematic diagram of fragment transmission according to the 802.11 ai;
FIG. 7 is a schematic diagram of fragment transmission;
FIG. 8 is a schematic diagram of a radio frame according to an embodiment of this application;
FIG. 9 is a schematic flowchart of a radio frame transmission method according to an embodiment of this application;
FIG. 10 is a schematic diagram of a format of a fragment element according to an embodiment of this application;
FIG. 11A, FIG. 11B and FIG. 11C are a schematic diagram of transmitting a radio frame through a multiple BSSID element according to an embodiment of this application;
FIG. 12 is a schematic diagram of transmitting a radio frame through a multiple BSSID element according to an embodiment of this application;
FIG. 13 is a schematic diagram of a communication apparatus according to an embodiment of this application; and
FIG. 14 is another schematic diagram of a communication apparatus according to an embodiment of this application.

## DESCRIPTION OF EMBODIMENTS

In this application, unless otherwise specified, same or similar parts of embodiments may refer to each other. In embodiments of this application and the implementations/implementation manners/implementation methods in embodiments, unless otherwise specified or a logical conflict occurs, terms and/or descriptions are consistent and may be mutually referenced between different embodiments and between the implementations/implementation manners/implementation methods in embodiments. Technical features in the different embodiments and the implementations/implementation manners/implementation methods in embodiments may be combined to form a new embodiment, an implementation, an implementation manner, or an implementation method based on an internal logical relationship thereof. The following implementations of this application do not constitute a limitation on the protection scope of this application.

It may be understood that, in some scenarios, some optional features in embodiments of this application may be independently implemented without depending on another feature, for example, solutions on which the optional features are currently based, to resolve corresponding technical problems and achieve corresponding effects. Alternatively, in some scenarios, the optional features are combined with the another features based on a requirement. Correspondingly, the apparatus provided in embodiments of this application may also correspondingly implement these features or functions. Details are not described herein.

In the descriptions of this application, "a plurality of" means two or more unless otherwise specified. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may exist alone or in plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference between the quantity and the execution sequence. In addition, in embodiments of this application, the term such as "example" or "for example" represents giving an example, an illustration, or a description. Any embodiment or implementation described as an "example" or "for example" in embodiments of this application shall not be explained as being more preferred or having more advantages than another embodiment or implementation. Exactly, use of the term such as "example" or "for example" is intended to present a relative concept in a specific manner for ease of understanding.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions provided in this application are applicable to a WLAN scenario, for example, are applicable to the IEEE 802.11 system standard, such as the 802.11a/b/g standard, 802.11n standard, 802.11ac standard, 802.11ax standard, or a next-generation of the IEEE 802.11 system standard, such as the 802.11be standard or a further next-generation standard.

Although embodiments of this application are mainly described by using an example of a deployed WLAN network, especially a network applying the IEEE 802.11 system standard, a person skilled in the art easily understands that aspects in this application may be extended to other networks using various standards or protocols, for example, Bluetooth (Bluetooth), a high performance radio LAN (high performance radio LAN, HIPERLAN) (which is a wireless standard similar to the IEEE 802.11 standard, and mainly used in Europe), a wide area network (WAN), a personal area network (personal area network, PAN), or another network that is known currently or that develops in future. Therefore, the various aspects provided in this application are applicable to any suitable wireless network regardless of coverage and a wireless access protocol.

Alternatively, embodiments of this application may be applicable to a wireless local area network system, such as an internet of things (internet of things, IoT) or a vehicle-to-everything (Vehicle to X, V2X). Certainly, embodiments of this application are further applicable to another possible communication system, such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future sixth generation (6th generation, 6G) communication system.

The foregoing communication systems applicable to this application are only examples for description, and are not limited thereto. A unified description is provided herein, and details are not described below.

A radio frame sending method and apparatus, and a radio frame receiving method and apparatus provided in embodiments of this application may be applied to a wireless communication system. The wireless communication system may be a wireless local area network (wireless local area network, WLAN) or a cellular network. The method may be implemented by a communication device in the wireless communication system, or implemented by a chip or a processor in the communication device. The communication device may be a wireless communication device that supports parallel transmission on multiple links. For example, the communication device is referred to as a multi-link device (multi-link device, MLD) or a multi-band device (multi-band device). Compared with a device that supports only single-link transmission, the multi-link device has higher transmission efficiency and a higher throughput.

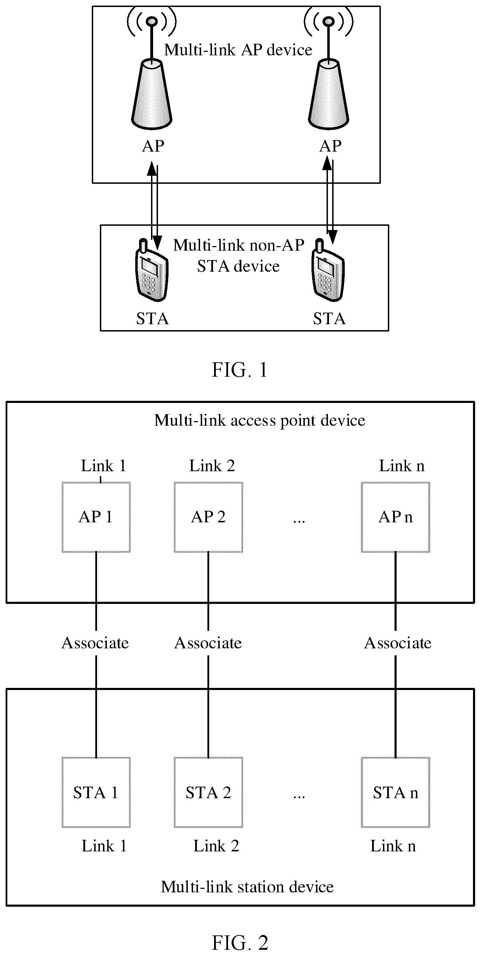

FIG. 1 is a schematic diagram of a communication system according to an embodiment of this application.

As shown in FIG. 1, the communication system mainly includes at least one multi-link access point device (Multi-link AP device) and at least one multi-link non-access point station device (Multi-link non-AP STA device) (briefly referred to as a multi-link station device). The multi-link access point device and the multi-link station device may be collectively referred to as a multi-link device. The following provides descriptions about the multi-link device.

Generally, the multi-link device includes one or more affiliated stations (affiliated stations, denoted as affiliated STAs). The affiliated STA is one logical station and may work on one link. The affiliated station may be an access point (access point, AP) or a non-access point station (non-access point station, non-AP STA). For ease of description, in this application, a multi-link device whose affiliated station is the AP may be referred to as a multi-link AP, a multi-link AP device (multi-link AP device) or an AP multi-link device (AP multi-link device). A multi-link device (multi-link non-AP STA device) whose affiliated station is the non-AP STA may be referred to as a multi-link STA, a multi-link STA device, or a STA multi-link device (STA multi-link device). For ease of description, "a multi-link device includes an affiliated STA" is also briefly described as "a multi-link device includes a STA" in embodiments of this application.

It should be noted that the multi-link device includes a plurality of logical stations, and each logical station works on one link, but the plurality of logical stations are allowed to work on a same link. A link identifier mentioned below represents one station working on one link. In other words, if there is more than one station on one link, more than one link identifier represents the more than one station. A link mentioned below sometimes also represents a station working on the link.

During data transmission between the multi-link AP device and the multi-link STA, the link identifier may be used to identify one link or a station on the link. Before communication, the multi-link AP device and the multi-link STA device may negotiate or communicate with each other about a correspondence between the link identifier and the link or the station on the link. Therefore, during the data transmission, a large quantity of signaling information does not need to be transmitted, to indicate the link or the station on the link, provided that the link identifier is carried. This reduces signaling overheads and improves transmission efficiency.

In an example, during establishment of a BSS, a management frame, such as a beacon (beacon) frame, sent by the multi-link AP device, carries one element including a plurality of link identifier information fields. Each link identifier information field may establish a correspondence between one link identifier and a station that works on one link. Each link identifier information field includes the link identifier, and further includes one or more of the following: a medium access control (medium access control, MAC) address, an operating set, and a channel number. The one or more of the MAC address, the operating set, and the channel number may indicate one link. In another example, in a multi-link association establishment process, the multi-link AP device and the multi-link station device negotiate about the plurality of link identifier information fields. In subsequent communication, the multi-link AP device or the multi-link station device may represent one station in the multi-link device by the link identifier. The link identifier may further represent one or more attributes of a MAC address, a working operating set, and a channel number of the station. The MAC address may alternatively be replaced with an association identifier of the multi-link AP device after association.

If a plurality of stations work on one link, the link identifier (which is a numeric ID) represents an operating set to which the link belongs, a channel number, and further represents an identifier of a station working on the link, such as MAC address or AID of the station.

The multi-link device may implement wireless communication according to the 802.11 series protocols. For example, a station supporting an extremely high throughput (extremely high throughput, EHT) station, a station supporting the 802.11be, or a station compatible with supporting the 802.11be implements communication with another device. Certainly, the another device may be or may not be a multi-link device.

The non-AP MLD in this application may be a wireless communication chip, a wireless sensor, or a wireless communication terminal. For example, the non-AP MLD may be a user terminal, a user apparatus, an access apparatus, a subscriber station, a subscriber unit, a mobile station, a user agent, or user equipment that has a wireless communication function. The user terminal may include various handheld devices, vehicle-mounted devices, wearable devices, internet of things (internet of things, IoT) devices, computing devices, or other processing devices connected to a wireless modem that have a wireless communication function; or various forms of user equipment (user equipment, UE), mobile stations (mobile station, MS), terminals (terminal), terminal equipment (terminal equipment), portable communication devices, handheld devices, portable computing devices, entertainment devices, game devices or systems, global positioning system devices, or any other proper devices configured to perform network communication via a wireless medium. In addition, the non-AP MLD may support the 802.11be standard or a next-generation WLAN standard of the 802.11be standard. The non-AP MLD may further support a plurality of WLAN standards such as the 802.11ax, 802.11ac, 802.11n, 802.11g, 802.11b, and 802.11a.

The AP MLD in embodiments of this application may be an apparatus deployed in a wireless communication network, to provide a wireless communication function for a non-AP associated with the AP MLD. The AP MLD is mainly deployed at home, in a building, or in a campus. A typical coverage radius is tens of meters to 100-odd meters. Certainly, the AP MLD may alternatively be deployed outdoors. The AP MLD is equivalent to a bridge that connects a wired network and a wireless network. A main function of the AP MLD is to connect various wireless network clients together and then connect the wireless network to the Ethernet. Specifically, the AP MLD may be a communication device with a Wi-Fi chip, such as a base station, a router, a gateway, a repeater, a communication server, a switch, or a bridge. The base station may include macro base stations, micro base stations, relay stations, and the like in various forms. In addition, the AP MLD may support the 802.11be standard or the next-generation WLAN standard of the 802.11be standard. The AP MLD may further support the WLAN standards such as the 802.11ax, 802.11ac, 802.11n, 802.11g, 802.11b, and 802.11a.

As described above, the multi-link access point device and the multi-link station device may communicate with each other through a plurality types of radio frames, such as an association request frame, a reassociation request frame, an association response frame, a reassociation response frame, and a probe response frame. Different radio frames each may carry a multi-link element (multi-link element, MLE), to carry station information of the multi-link device. The MLE may also be referred to as a multi-link information unit.

The following uses an association process of the multi-link device as an example to describe a specific implementation of an association request frame used in the association process. As shown in FIG. 2, in a multi-link establishment (or multi-link association) process, one station in a multi-link station device may send an association request frame to one access point in a multi-link access point device. The association request frame carries an MLE to carry information about the current station of the multi-link station device and information about another station in the multi-link device. Similarly, an association response frame returned by the access point to the station may also carry an MLE to carry information about the current access point of the multi-link access point device and information about another access point in the multi-link device.

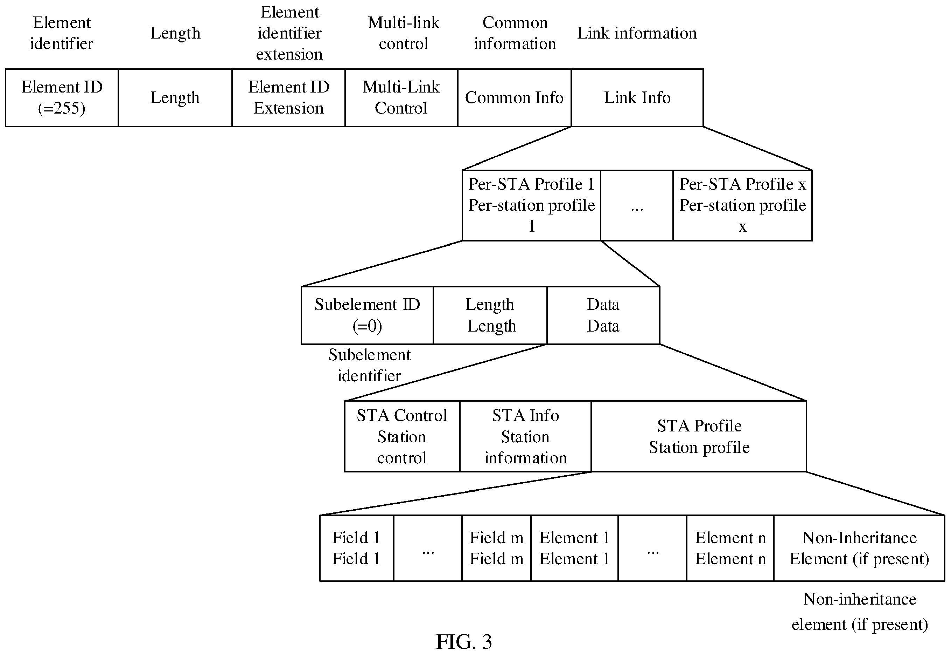

FIG. 3 is a schematic diagram of a frame structure of an MLE. The MLE includes an element identifier (Element ID) field (for example, a value may be 255 shown in FIG. 3), a length (Length) field, an element identifier extension (Element ID Extension) field, a multi-link control (Multi-Link Control) field, a common information (Common Info) field, and a link information (Link Info) field. The common info field carries common information of a plurality of stations in a multi-link device, and information about the multi-link device. The link info field carries information about a station on each link in the multi-link device. The multi-link control field carries a type of the multi-link element, and indication information indicating which fields are present (present) and which fields are not present in the common info.

Further, as shown in FIG. 3, the link info field may further include one or more per-station profile (Per-STA Profile) fields. FIG. 3 uses an example in which a quantity of per-STA profile fields is x (x is greater than 1). Each per-STA profile field may further include a subelement identifier (subelement ID) field (for example, a value of the subelement ID field may be 0 shown in FIG. 3), a length (Length) field, and a data (Data) field.

Further, as shown in FIG. 3, the data field may further include a station control (STA Control) field, a station information (STA Info) field, and a station profile (STA Profile) field.

Further, as shown in FIG. 3, the STA profile field includes a plurality of fields (fields). For example, a quantity of fields is m (x is greater than 1) in FIG. 3. The STA profile field further includes a plurality of elements (Elements). For example, a quantity of elements is n (n is greater than 1) in FIG. 3. In addition, the STA profile field further includes a non-inheritance element (Non-inheritance element) if present (if present).

However, as shown in FIG. 3, a length of content that can be carried in the MLE is limited, and the specific length is indicated by the length field in the MLE. Specifically, the length field indicates a quantity of octets following the length field in the MLE. For example, the length field in the MLE is 8 bits in length, and indicates a length of 0 to 255 octets. However, a length of information to be carried in the MLE may exceed 255 octets, making it impossible to use only one MLE to carry the information about the multi-link device.

In addition, the station information on each link in the multi-link device is carried in the subelement (subelement) per-STA profile in the link info, while a length of each per-STA profile is also limited. For example, the length field in the per-STA profile is 8 bits in length, so that the data portion can carry a maximum of 255 octets. However, the station information on each link may be longer than 255 octets, making it impossible to use only one per-STA profile to carry the station information on each link.

Before embodiments of this application are described, a conventional technology related to a basic service set (basic service set, BSS) scenario in a WLAN communication system is first described.

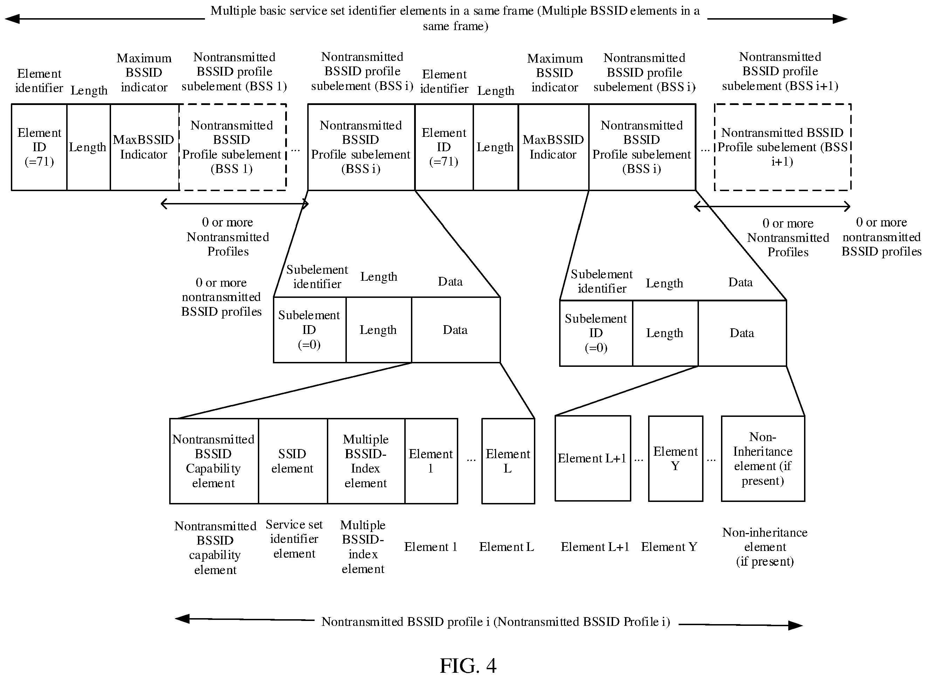

As shown in FIG. 4, a radio frame structure includes two adj acent multiple basic service set identifier elements (Multiple BSSID elements). Each multiple BSSID element includes an element identifier (Element ID) field (for example, a value is 71 shown in FIG. 3), a length field, a maximum BSS indicator (Max BSSID Indicator) field, and a nontransmitted BSSID profile subelement (Nontransmitted BSSID Profile subelement, or referred to as a Nontransmitted BSSID Profile) field. A quantity of the nontransmitted BSSID profile subelement fields is 0 or more (0 or more Nontransmitted BSSID Profiles). FIG. 4 uses an example in which the quantity of nontransmitted BSSID profile subelement fields is i (i is greater than 1).

Further, as shown in FIG. 4, a nontransmitted BSSID profile subelement i (BSS i) includes a subelement ID field (for example, a value of the subelement ID field is 0), a length field, and a data field.

Further, as shown in FIG. 4, the data field includes a nontransmitted BSSID capability element (Nontransmitted BSSID Capability element) field, a service set identifier element (SSID element), a multiple BSSID-index element (Multiple BSSID-Index element), one or more elements, and a non-inheritance element (if present). In the example shown in FIG. 4, the nontransmitted BSSID profile subelement i in a first multiple BSSID element includes a first element to an element L (L is greater than 1), and the nontransmitted BSSID profile subelement i in a second multiple BSSIDS element includes an element L+1 to an element Y (Y is greater than L).

Specifically, the multiple BSSID element carries information about a plurality of virtual APs in a multi-link device with which one AP is affiliated. The length field is 8 bits, indicating that a maximum of 255 octets can be carried. However, a length of the information about the plurality of virtual APs may exceed 255 octets. Therefore, a plurality of multiple BSSID elements are needed to carry the information about the plurality of virtual APs. As shown in FIG. 4, the first multiple BSSID element carries a first portion of information about a BSS 1 to a BSS i, and the second multiple BSSID element carries a remaining portion of information about BSS i and information about a BSS i+1. Content of the two multiple BSSID elements may be concatenated, to obtain information about the BSS 1 to the BSS i+1. The information about each BSS starts with the nontransmitted BSSID capability element.

However, in the example shown in FIG. 4, because the information about the BSS i is distributed in the two multiple BSSID elements, a station needs to read a first information element of the data portion of the nontransmitted BSSID profile subelement in the second multiple BSSID element, and determine, based on whether the first information element is the nontransmitted BSSID capability element, whether the first information element is information about a new BSS or remaining portion of information about a previous BSS.

However, for the frame structure of the MLE shown in FIG. 3, a first field of the per-STA profile subelement is the STA control field, not an information element. Content carried in the STA control field is variable, which is different from a specific fixed information unit, and content of a first octet (which is an element ID) in the information unit is fixed. Therefore, it cannot be determined, by reading a first octet of a data portion of a per-STA profile in a second MLE, whether this is information about a new AP or information about a remaining portion of a previous AP.

In other words, the implementation in which the information about one AP is carried through the multiple BSSID elements in the current multiple BSSID element is not applicable to a process in which station information of one link is carried through a plurality of MLEs in an MLE.

For an element similar to the multiple BSSID element, one element may also not be able to carry all information. Therefore, in a current WLAN radio frame transmission process, a solution is urgently needed to resolve a radio frame transmission failure caused because one element cannot carry information about a single-link device or information about a multi-link device.

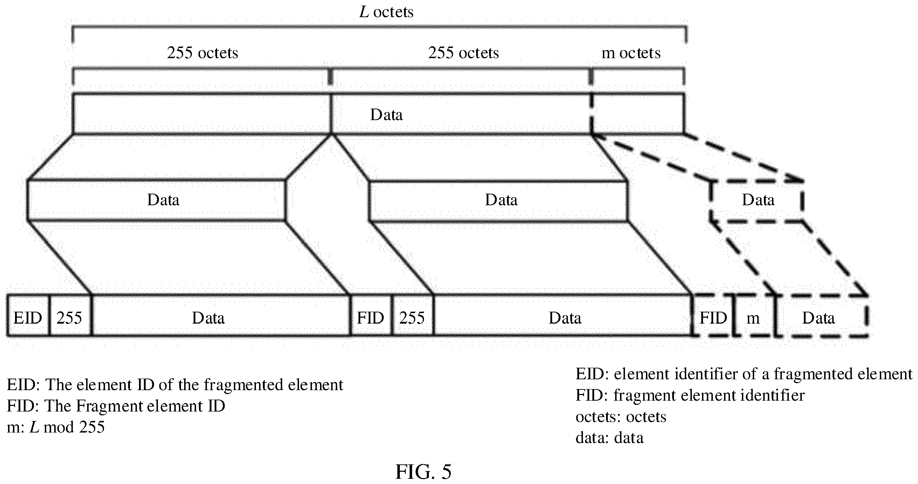

The current 802.11ai standard provides an information fragmentation mechanism, as shown in FIG. 5.

If a length of a data portion is L octets, the L octets may be divided into M+N portions. If the information element does not include an element ID extension field,

$$M = \lfloor L / 255 \rfloor,$$

and

$$N = \begin{cases} 1, & \text{if } L \bmod 255 > 0 \\ 0, & \text{else} \end{cases}.$$

A first portion is carried in an information element (a value of an element ID indicates the information element), and a remaining portion is carried in one or more fragment information elements (fragment elements). The fragment information element is one type of the information element, and a value of an element ID of the fragment information element is 242, indicating that the information element is the fragment information element, and the element ID is represented as a fragment identifier (fragment ID, FID). In addition, a length of an information element corresponding to the M portions is 255 octets, and a length m of an information element corresponding to the N portions (if present) is less than 255 octets.

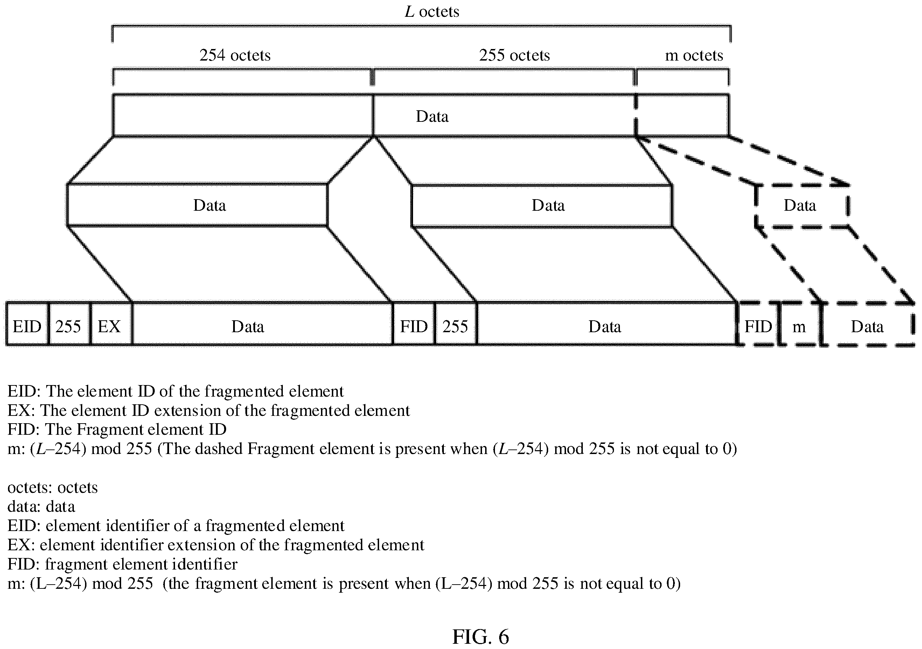

If the information element includes an element ID extension field, as shown in FIG. 6,

$$M = \lfloor (L+1) / 255 \rfloor,$$

and

$$N = \begin{cases} 1, & \text{if } (L\text{-}254) \bmod 255 > 0 \\ 0, & \text{else} \end{cases}.$$

However, the information fragmentation mechanism mentioned in the 802.11ai standard is not applicable to a case in which a data portion of an element further includes an indication field and a subelement. In this case, information can be carried only in the data portion of the subelement of the element, and the indication field cannot be used to carry the information. Therefore, none of the formulas provided in the 802.11ai is applicable, and a problem of information fragment transmission in this case cannot be resolved.

A specific element is used as an example for description. The multiple basic service set identifier element (Multiple BSSID element) shown in FIG. 3 is used to carry information about an AP that belongs to a same multiple basic service set identifier set (Multiple BSSID Set) as a current AP.

The multiple BSSID element includes a maxBSSID indicator field and one or more nontransmitted BSSID profile subelements. Each nontransmitted BSSID profile subelement carries information about an AP that belongs to a same multiple basic service set identifier set (Multiple BSSID Set) as a current AP. In the nontransmitted BSSID profile subelement, first three information elements are a nontransmitted BSSID capability element, SSID element, and a multiple BSSID-index element, and several other elements may be further included after the multiple BSSID-index element.

In the several other elements, lengths of some elements may be relatively long, and may exceed 255 octets. If the information fragmentation mechanism provided in the 802.11ai is used to fragment the element, a length (a length indicated by the length field) may not match an actual length.

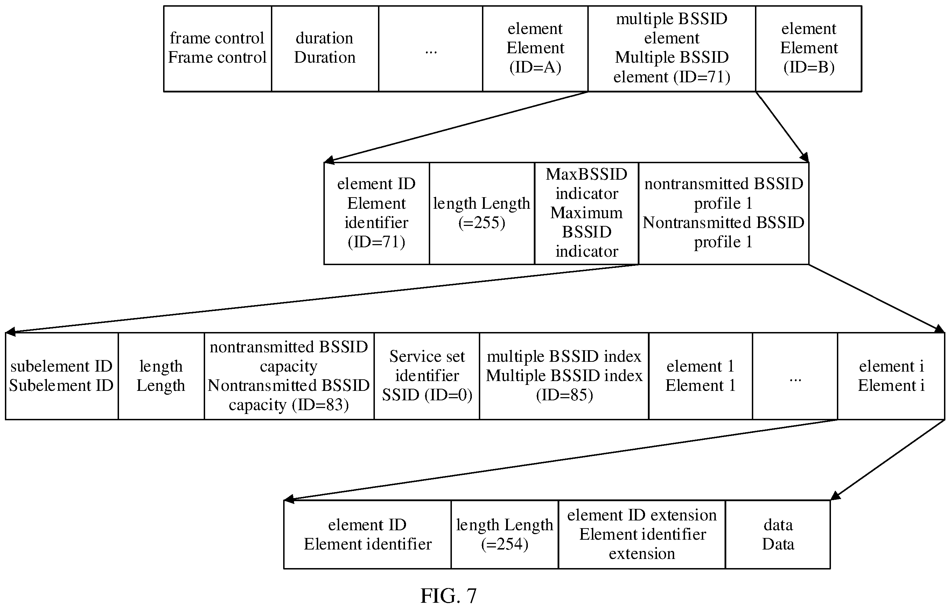

As shown in FIG. 7, it is assumed that a length of an element i exceeds 255 octets, and fragmentation needs to be performed. According to the fragmentation mechanism provided in the 802.11ai, a length of a length field in an information element corresponding to a first fragment shall be set to 254. However, due to a maximum length limit on the multiple BSSID element, an actual length of a data portion carried in the information element corresponding to the first fragment is less than 254 octets, and is inconsistent with the length indicated by the length field. When parsing the multiple BSSID element, a conventional station reads the information element corresponding to the first fragment of the element i, finds that an element ID or an element ID extension corresponds to an information element that is not supported by the conventional station, and skips the information element based on the indication of the length field. However, the length indicated by the length field is greater than the actual length of the data field, so that the transmission station skips an incorrect location based on the indication of the length field, and finally causes a parsing error.

To resolve the foregoing problem, this application provides a radio frame sending method and apparatus, and a radio frame receiving method and apparatus, to use at least two elements in a radio frame to carry information whose length exceeds a maximum length that can be carried in one element. In addition, when the at least two elements are used to carry the information, overheads of some indication fields in the elements are considered to be removed. This carries information about a single-link station device or a multi-link station device, avoids a radio frame transmission failure and incorrect parsing of a receive end, and improves communication efficiency.

In other words, this application provides a mechanism for fragment transmission of an information portion of a subelement of a specific element, to carry implement information of the single-link station device or the multi-link station device, avoid the radio frame transmission failure and incorrect parsing of the receive end, and improve the communication efficiency.

**Embodiment 1**

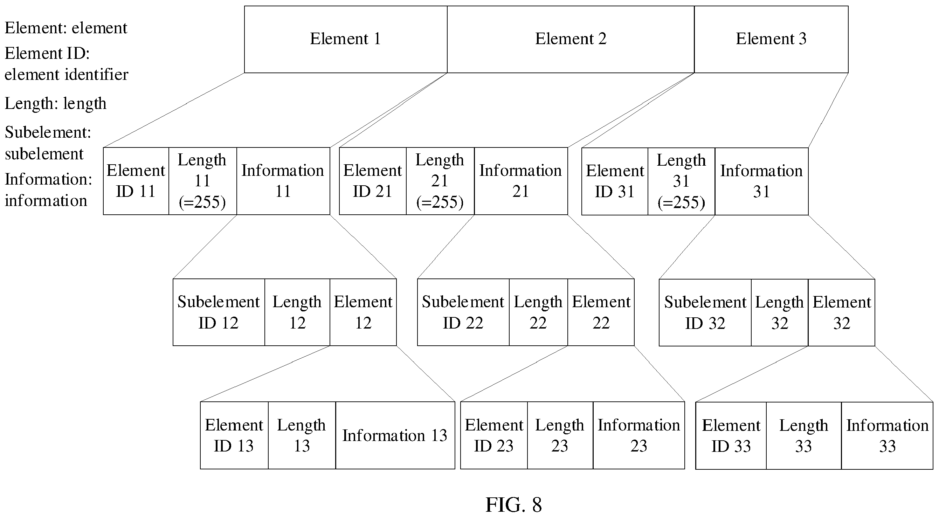

A structure of a radio frame provided in this application is shown in FIG. 8.

In this embodiment, information to be sent in fragments is sent in a plurality of elements. The information to be sent in fragments is an information portion/a data field portion of one information element. A length of the information is L octets, and does not include an element ID field and a length field of the information element, or does not include an element ID extension field. Each element carries information about one fragment.

In an implementation, the information element is a multi-link element (multi-link element). In another implementation, the information element is all fragmentable elements (fragmentable elements) defined in the 802.11 standard.

The element carries the information portion. For example, an element 22 carries information 23, and the element 22 is carried in an information portion, namely information 21, of another element, namely element 2 for transmission. In this application, another element carried in an information portion of one element is referred to as a subelement, to distinguish the two types of elements. This scenario is referred to as an architecture with at least two layers of nested elements in this application, for example, the element 22 in the information portion, namely information 21 of the element 2 in FIG. 8. This is referred to as two-layer element nesting of the element 2 and the element 22. It should be understood that this application describes how to implement fragment transmission of the information in the architecture with the at least two layers of nested elements. Neither an element nor a subelement is used to limit a name of an element.

It should be understood that a length of an information portion that may be carried in a specific element is indicated by a length field in the element. As described above, currently, a length field in one element is set to 255, to indicate that a length of an information portion following the length field is equal to 255 octets.

In the architecture with the at least two layers of nested elements provided in this application, each layer of element carries a length field. If the length field is set to 255 octets as in a conventional technology, an error inevitably occurs. Therefore, in this application, a value of a length field corresponding to an uppermost element is set to 255, and a value of a length field corresponding to a subelement nested in the element is less than 255 octets. In other words, a length of information that can be carried in an information field of the element is less than 255 octets, specifically, the length of the information needs to be obtained by subtracting a length of an indication field included in the element from 255.

For example, as shown in FIG. 8, a value of a length 21 included in the element 2 is set to 255. Then, a value of a length 23 in the subelement, namely element 22 of the information portion, namely information 21in the element 2 is obtained by subtracting, from 255, a quantity of octets of a subelement ID, namely 1, a quantity of octets of the length 22, namely 1, and a quantity of octets of an element ID included in the element 22, namely 1. That is, the value of the length 23 should be 255-3=252, in other words, a length of information that can be carried in the information 23 is 252. If the element 22 further includes an extension ID, a quantity of octets of the extension ID, namely 1 should be subtracted, that is, 255-4=251. The length of the information that can be carried in the information 23 is 251.

It should be understood that a first element carrying a first information portion in fragment transmission may further carry another subelement. Therefore, for a subelement used to transmit fragment information, a quantity of octets occupied by the another subelement needs to be subtracted from a length of the first information portion that can be carried in the subelement.

It should be further understood that, in a last element used to carry fragment information, a sum of a length of fragment information carried in an information field of a subelement included in the element and an indication field in the element is less than or equal to a length of 255 octets indicated by a length field of the element.

In implementing Embodiment 1 of this application, a plurality of elements may carry information that is not completely carried in one element. Some fixed indication overheads in one element are fully considered to be removed from a length of an information portion that may be carried. In this way, the information can be correctly carried in fragments, and no parsing error occurs at a receive end.

**Embodiment 2**

The following further describes this embodiment of this application with reference to a sending and receiving procedure of a radio frame.

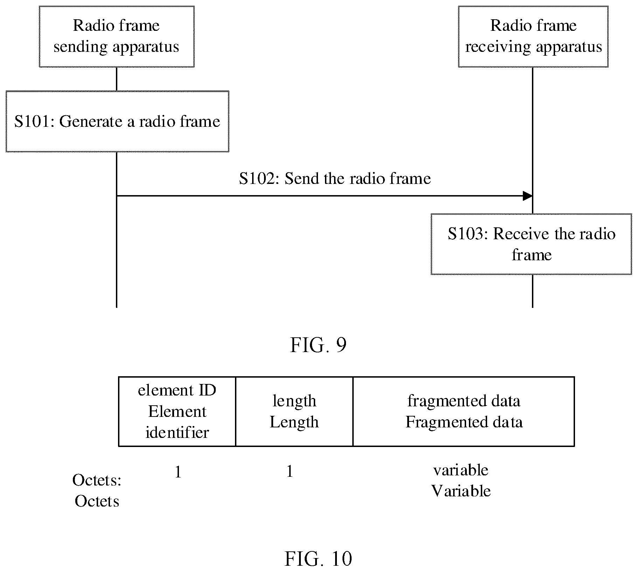

FIG. 9 is a schematic flowchart of a radio frame sending method according to this application. The method embodiment includes the following steps.

Step S101: A sending apparatus generates a radio frame. The radio frame includes one first element, and further includes at least one of a second element and a third element.

The first element includes a first length field and a first information portion following the first length field, the first information portion includes a first indication field and a first subelement, and the first subelement includes a first indication subfield and a first information field.

The second element includes a second length field and a second information portion following the second length field. The second information portion includes a second indication field and a second subelement, and the second subelement includes a second indication subfield and a second information field.

The third element includes a third length field and a third information portion following the third length field. The third information portion includes a third indication field and a third subelement, and the third subelement includes a third indication subfield and a third information field.

Information with a total length of L octets to be sent in fragments is carried in the first information field, and is further carried in at least one of the second information field and the third information field.

A length of information carried in the first information field is K octets.

A length of information carried in the second information field is obtained by subtracting X octets, namely a sum of a quantity of octets of the second indication field and the second indication subfield, from a quantity of octets of the second information portion.

It should be understood that the second indication field and the second indication subfield herein are essentially a sum of all possible indication fields following the length field included in the second element. The second indication field and the second indication subfield may be collectively referred to as indication fields. In another implementation, only one of the second indication field and the second indication subfield may be present.

A length of information carried in the third information field is obtained by subtracting K octets, namely the length of the information carried in the first information field, from the total length of L octets; or
a length of information carried in the third information field is obtained by subtracting K octets, namely the length of the information carried in the first information field, from the total length of L octets, and then subtracting the length of the information carried in the second information field.

Step S102: The sending apparatus sends the radio frame.

Step S103: A receiving apparatus obtains, based on the radio frame, the information with the total length of L octets sent in fragments.

With reference to the radio frame shown in FIG. 8, the radio frame includes one first element (element 1), and further includes at least one of a second element (element 2) and a third element (element 3).

The first element (element 1) includes a first length field (length 11) and a first information portion (information 11) following the first length field (length 11). Certainly, an element identifier field (element ID 11) is further included before the first length field. The first information portion (information 11) includes a first indication field (for example, includes a subelement ID 12 and a length 12) and a first subelement (element 12). The first subelement (element 12) includes a first indication subfield (for example, an element ID 13 and a length 13) and a first information field (information 13).

It should be understood that both the first indication field and the first indication subfield herein are examples, and the first indication field and the first indication subfield may also be collectively referred to as all indication fields included in the first information portion. In an actual scenario, the first element may include only the first indication field or the first indication subfield. Certainly, the first element may further include another field, and even another element that is not used to transmit current fragment information, which are considered as the first indication field and/or the first indication subfield.

Similarly, if a second element is present, the second element (element 2) includes a second length field (length 21) and a second information portion (information 21) following the second length field (length 21). Certainly, an element identifier field (element ID 21) is further included before the first length field. The second information portion (information 21) includes a second indication field (for example, includes a subelement ID 22 and a length 22) and a second subelement (element 22). The second subelement (element 22) includes a second indication subfield (for example, element ID 23 and length 23) and a second information field (information 23).

It should be understood that both the second indication field and the second indication subfield herein are examples, and the second indication field and the second indication subfield may also be collectively referred to as all indication fields included in the second information portion. In an actual scenario, the second element may include only the second indication field or the second indication subfield. Certainly, the second element may further include another field, and even another element that is not used to transmit current fragment information is considered as the second indication field and/or the second indication subfield.

Similarly, if a third element is present, the third element (element 3) includes a third length field (length 31) and a third information portion (information 31) following the third length field (length 31). Certainly, an element identifier field (element ID 31) is further included before the third length field. The third information portion (information 31) includes a third indication field (for example, includes a subelement ID 32 and a length 32) and a third subelement (element 32). The third subelement (element 32) includes a third indication subfield (for example, an element ID 33 and a length 33) and a third information field (information 33).

It should be understood that both the third indication field and the third indication subfield herein are examples, and the third indication field and the third indication subfield may also be collectively referred to as all indication fields included in the third information portion. In an actual scenario, the third element may include only the third indication field or the third indication subfield. Certainly, the third element may further include another field, and even another element that is not used to transmit current fragment information, which are considered as the third indication field and/or the third indication subfield.

Information with a total length of L octets to be sent in fragments is carried in the first information field (information 13), and is further carried in at least one of the second information field (information 23) and the third information field (information 33).

In an implementation, the first subelement is an information element, and each of the second subelement and the third subelement is a fragment element.

Specifically, the first subelement includes an element identifier element ID, which is an ID of the information element of the to-be-fragmented information. Each of the second subelement and the third subelement includes an element ID, and a value of the element ID is 242, indicating that each of the second subelement and the third subelement is a fragment information element. In this case, the fragment element ID may also be referred to as a fragment ID (FID).

A value of the first length field is 255, indicating that a length of the first information portion is 255 octets. A length of the first indication field is A1 octets. As the example in FIG. 8, the first indication field includes the subelement ID 12 and the length 12, and each of the subelement ID 12 and the length 12 occupies one octet. In this case, A1 is 2 octets. A length of the first indication subfield is A2 octets. For example, as shown in FIG. 8, the first indication subfield includes the element ID 13 and the length 13, and each of the element ID 13 and the length 13 occupies one octet. In this case, A2 is 2 octets, and a length K of information carried in the first information field is 255-A1-A2=255-2-2=251 octets. It should be understood that the first indication field herein is merely an example. In an implementation, there may be another possibility in different elements. For example, as shown in FIG. 8, after the length 11 and before the information 11 that are included in the element 1, another indication field that occupies A3 octets is further included. Therefore, the length of the information carried in the first information field, namely information 13 K=255-A1-A2-A3. For another example, after the subelement ID 12 and the length 12 carried in the information 11 of the element 1, and before the element 12, an element carrying another information element may be further included. A function of the element is different from that of the element 12, and the element is not used to carry fragment information. It is assumed that an octet occupied by the element is A4. In this case, the length of the information carried in the first information field, namely information 13 K=255-A1-A2-A3-A4. For another example, after the element ID 13 and the length 13, and before the information 13 that are carried in the element 12, an element ID extension field may be further included. An octet occupied by the element ID extension field is A5. In this case, the length of the information carried in the first information field, namely information 13 K=255-A1-A2-A3-A4-A5.

A value of the second length field is 255, indicating that the length of the second information portion is 255 octets. The length of the second indication field is X1 octets, the length of the first indication subfield is X2 octets, and the length of the information carried in the second information field is (255-X1-X2) octets.

For example, as shown in FIG. 8, the second indication field includes the subelement ID 22 and the length 22, and each of the subelement ID 22 and the length 22 occupies one octet. In this case, X1 is 2 octets. The length of the second indication subfield is X2 octets. For example, as shown in FIG. 8, the second indication subfield includes the element ID 23 and the length 23, and each of the element ID 23 and the length 23 occupies one octet. In this case, X2 is 2 octets, and the length of the information carried in the second information field is 255-X1-X2=255-2-2=251 octets. It should be understood that the first indication field herein is only an example. In an implementation, there may be another possibility in different elements. For example, as shown in FIG. 8, after the length 21 and before the information 21 that are included in the element 2, another indication field that occupies X3 octets is further included. In this case, the length of the information carried in the second information field, namely information 23 K=255-X1-X2-X3. Certainly, after the subelement ID 22 and the length 22, and before the element 22 that are carried in the information 21 of the second element for transmitting the fragment information, namely the element 2, the element carrying the another information element is not included.

The information to be sent in fragments is further carried in the second element. A quantity of the second elements is M, and a value of M is as follows:

$$M = \left\lfloor (L-K) \middle/ \left( \begin{array}{l} \text{Length of a second information portion indicated} \\ \text{by a second length indication field} - X \end{array} \right) \right\rfloor,$$

where $\lfloor \ \rfloor$ indicates rounding down.

In an implementation, if the length of the second information portion indicated by the second indication field is

$$M = \left\lfloor (L-K) / (255-X) \right\rfloor$$

equal to 255 octets, the quantity of second elements                              .

It should be understood that when the value of M is 1, it indicates that there is only one second element.

A quantity of third elements

$$N = \begin{cases} 1, \text{ if } (L-K) \ mod \ \left( \begin{array}{l} \text{Length of a second information portion indicated} \\ \text{by a second length indication field} - X \end{array} \right) > 0 \\ 0, \text{ else} \end{cases}$$

or

$$N = \begin{cases} 0, \text{ if } (L-K) \ mod \ \left( \begin{array}{l} \text{Length of a second information portion indicated} \\ \text{by a second indication field} - X \end{array} \right) = 0 \\ 1, \text{ else} \end{cases}.$$

In an implementation, if the length of the second information portion indicated by the second indication field is equal to 255 octets, the quantity of third elements

$$N = \begin{cases} 1, \text{ if } (L-K) \ mod \ (255-X) > 0 \\ 0, \text{ else} \end{cases}$$

or

$$N = \begin{cases} 0, \text{ if } (L-K) \ mod \ (255-X) = 0 \\ 1, \text{ else} \end{cases}.$$

It should be understood that when the value of N is 0, it indicates that the third element is not present.

It should be further understood that the value of M may be 0, and the value of N is 1, indicating that except the first element, only another element is used to transmit the fragment information, and a length of an information portion carried in the another element is less than 255-X.

When the third element is present, the length of the information carried in the third information field is L-K-(Length of the second information portion indicated by the second indication field-X)×M octets.

In an implementation, if the length of the second information portion indicated by the second indication field is equal to 255 octets, the length of the information carried in the third information field is L-K-(255-X)×M octets.

In a specific implementation, the radio frame receiving apparatus identifies the element ID of the first subelement of the first element, the element ID of the second subelement of the second element, and/or the element ID of the third subelement of the third element based on the first element, the second element, and/or the third element in the radio frame, and finds that the element ID of each of the second subelement and the third subelement is 242 (indicating the fragment element), and the element ID of the first subelement is an ID of a normal information element, to learn that the first information field of the first element, the second information field of the second element, and/or the third information field of the third element carry fragment information of a same information element. The radio frame receiving apparatus concatenates the fragment information, to obtain complete information with L octets. It should be understood that the first element, the second element, and/or the third element are adjacent elements.

The element ID of each of the first element, the second element, and/or the third element is identified, to learn which the first information field, the second information field and/or the third information field in the first element, the second element and/the third element carry fragment information of a same information element, to concatenate the fragment information of the same information element, to obtain the complete information with L octets. It should be understood that the first element, the second element, and/or the third element are adjacent elements.

In implementing Embodiment 2 of this application, a plurality of elements may carry information that is not completely carried in one element. Some fixed indication overheads in the element are fully considered to remove from a length of an information portion for carrying the information. In this way, the information can be correctly carried in fragments, and no parsing error occurs at a receive end.

## Embodiment 3

The following describes a specific implementation method for transmitting fragment information when fragment information is carried in a nontransmitted BSSID profile subelement in a multiple BSSID element, that is each of the first element, the second element, and the third element in the foregoing embodiment is a multiple BSSID element (multiple BSSID element).

It is assumed that a length of information to be transmitted in fragments is L octets. The L octets may be divided into first information, a second information portion, and/or a third information portion, which are separately carried in a plurality of multiple BSSID elements for fragment transmission.

In an implementation, the first information portion is carried in one information element (or carried in one information element whose element identifier is the same as that of the information element), and the remaining second information portion or the third information portion or both are carried in one or more fragment elements (Fragment elements). A format of the fragment element is shown in FIG. 10.

A length of the first information portion is a maximum length of the information element that can be carried in a first multiple BSSID element that carries the information element. In this case, a value of a length field of the first multiple BSSID element that carries the information element is 255. In other words, when the value of the length field (a first length field, that is, a field represents a length of the multiple BSSID element) in the multiple BSSID element that carries the first information portion of the information element is 255, the length of the first information portion is the maximum length of the information portion that can be carried except indication information included in the multiple BSSID element. It is assumed that the length of the first information portion is K octets.

The second information portion is carried in M multiple BSSID elements, where $M = \left\lfloor (L-K)/255 - X \right\rfloor$, and $\left\lfloor (L-K)/(255-X) \right\rfloor$ indicates that a rounding-down operation is performed on a result of (L-K)/(255-X).

If M>0, a length of each information portion in the M portions is (255-X) octets, and each of the information portion is carried in one multiple BSSID element. The length of each information portion is obtained by subtracting X octets from 255, in the M second elements, in addition to carrying the information portion, each second element further needs to carry some fixed overheads, and lengths of these fixed overheads are determined by element types of the second elements. The fixed overheads may include:

> a maxBSSID indicator, 1 octet;
> a subelement ID field in a nontransmitted BSSID profile subelement, 1 octet;
> a length field in the nontransmitted BSSID profile subelement, 1 octet;
> an element ID field that is in elements included in the multiple BSSID element and that is used to carry a fragment element of each of the M portions of the information portion, 1 octet; and
> a length field used to carry the fragment element of each of the M portions of the information element, 1 octet.

Therefore, a value of X is five octets that is a sum of the foregoing indication fields other than the information portion.

The length of each of the M portions of the information element carried in the fragment element is 255-X=255-5=250 octets. Therefore, the value of the length field of the fragment element used to carry each of the M portions of the information portion is 250 octets.

The foregoing fixed overheads are only examples. In an implementation, the fixed overheads may further include a field that needs to be carried in the second element. For example, the multiple BSSID element needs to carry the maximum BSSID indicator (MaxBSSID indicator) field with 1 octet.

In addition, the third information portion is carried in N multiple BSSID elements, where

$$N = \begin{cases} 1, & \text{if } (L-K) \bmod 250 > 0 \\ 0, & \text{else} \end{cases};$$

or

$$N = \begin{cases} 0, & \text{if } (L-K) \bmod 250 = 0 \\ 1, & \text{else} \end{cases}$$

If N=1, the N portions is a last portion after an information portion of the information element is fragmented, and a length of the N portions is L-K-250×M.

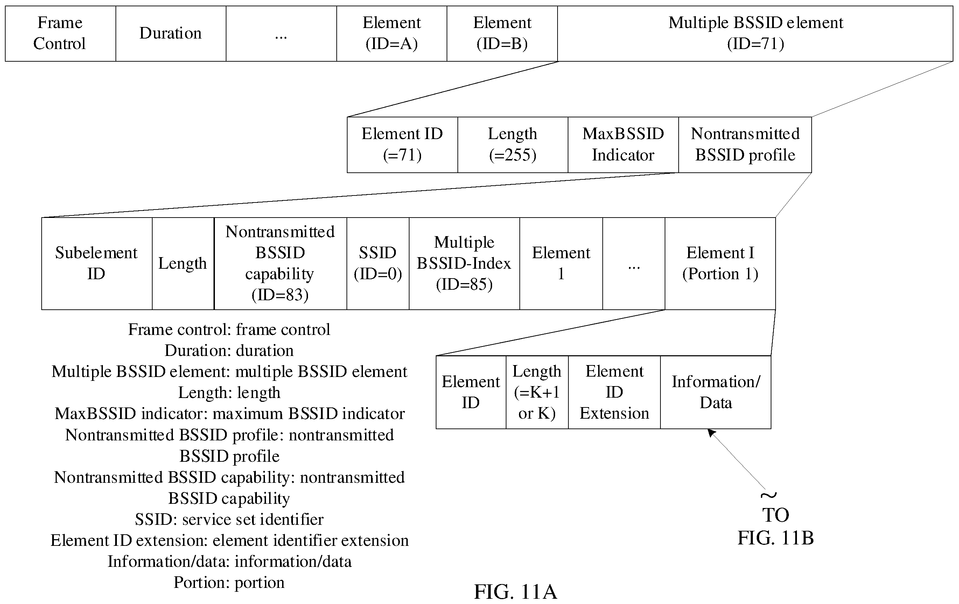

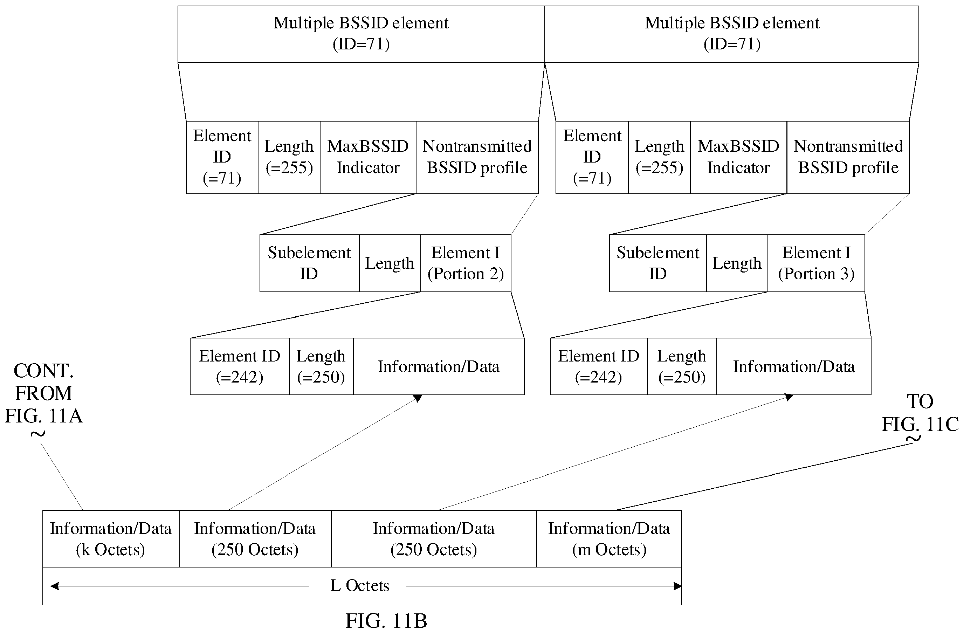

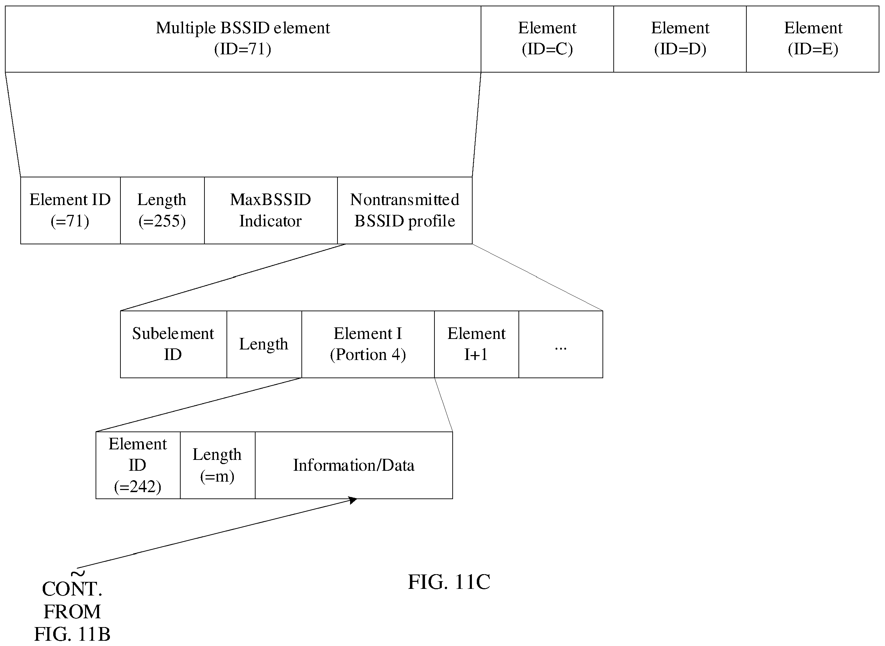

Specifically, as shown in FIG. 11A, FIG. 11B and FIG. 11C, the information to be transmitted in fragments is in total L octets, and is divided into a plurality of fragments. A first fragment is K octets, so that when the length of the multiple BSSID element carrying the first fragment is 255, the remaining K octets are used to carry the first information portion of the fragment information other than a quantity of octets of an indication field or a quantity of octets included in another element that has been carried in the multiple BSSID element. The length of the information portion for fragment transmission in a last fragment is m octets, where m<250. In addition to the first fragment and the last fragment, an information portion in a middle fragment carries information fields in M elements, and a length of each of the information field is 250 octets. The M elements are carried in the M multiple BSSID elements.

It should be understood that the information to be transmitted in fragments may also be referred to as data to be transmitted in fragments, and the foregoing information field that carries the fragment information may also be referred to as a data field.

In a specific implementation, a receive end identifies an element ID of a first subelement of the first multiple BSSID element, an element ID of a second subelement of the second multiple BSSID element, and/or an element ID of a third subelement of the third multiple BSSID element based on the first multiple BSSID element, the second multiple BSSID element, and/or the third multiple BSSID element in a radio frame, and finds that the element ID of each of the second subelement and the third subelement is 242 (indicating that the element ID is the fragment element). The element ID of the first subelement is an ID of a normal information element, to learn that a first information field of the first multiple BSSID element, a second information field of the second multiple BSSID element, and/or a third information field of the third multiple BSSID element carry fragment information of a same information element, to concatenate the fragment information of the same information element, to obtain the complete information with L octets. It should be understood that the first multiple BSSID element, the second multiple BSSID element, and/or the third multiple BSSID element are adjacent elements.

In implementing Embodiment 3 of this application, a plurality of multiple BSSID elements may carry information that is not completely carried in one multiple BSSID element. Some fixed indication overheads in the multiple BSSID element are fully considered to remove from a length of an information portion for carrying the information. In this way, the information can be correctly carried in fragments, and no parsing error occurs at the receive end.

**Embodiment 4**

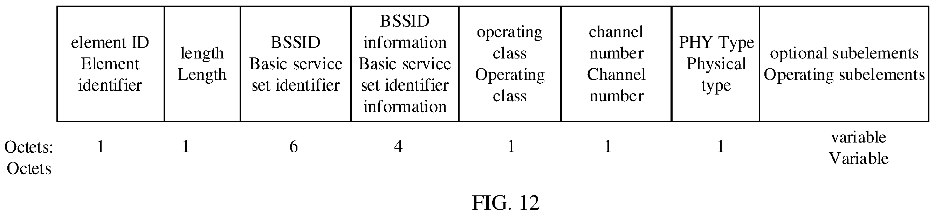

In a specific implementation, each of a first element, a second element, and/or a third element may be a neighbor report element, as shown in FIG. 12.

An implementation of carrying information to be sent in fragments in the neighbor report element in fragments is similar to the foregoing implementation of carrying the information in the multiple BSSID element, and details are not described herein. It should be noted that, indication fields that need to be carried in the neighbor report element are an element identifier (element ID) and a length (length) field, a basic service set identifier (BSSID), basic service set identifier information (BSSID information), an operating class (operating class), a channel number (channel number), and a physical type (PHY type) field, and has 15 octets in total. Therefore, a length of an information portion carried in optional subelements field of the neighbor report element is 255-X, and X=15. Therefore, a value of a length field of each fragment element in M second elements, namely neighbor report elements 255-X=255-15=240 octets. Certainly, a length of an information portion carried in a first neighbor report element is K=255-A octets, and a value of A is greater than or equal to X.

Certainly, a length of an information portion carried in a last neighbor report element is L-K-250×M octets.

In the specific implementation, a receive end identifies an element ID of a first subelement of the first neighbor report element, an element ID of a second subelement of the second neighbor report element, and/or an element ID of a third subelement of the third neighbor report element based on the first neighbor report element, the second neighbor report element, and/or the third subelement in a radio frame, and finds that the element ID of each of the second subelement and the third subelement is 242 (indicating that the element ID is the fragment element). The element ID of the first subelement is an ID of a normal information element, to learn that a first information field of the first neighbor report element, a second information field of the second neighbor report element, and/or a third information field of the third multiple BSSID element carry fragment information of a same information element, to concatenate the fragment information of the same information element, to obtain complete information with L octets. It should be understood that the first neighbor report element, the second neighbor report element, and/or the third neighbor report element are adjacent elements.

In implementing Embodiment 4 of this application, a plurality of neighbor report elements may carry information that is not completely carried in one neighbor report element. Some fixed indication overheads in the neighbor report element are fully considered to remove from a length of an information portion for carrying the information. In this way, the information can be correctly carried in fragments, and no parsing error occurs at the receive end.

The foregoing describes this application from a perspective of a method, and the following further describes this application from a perspective of an apparatus.

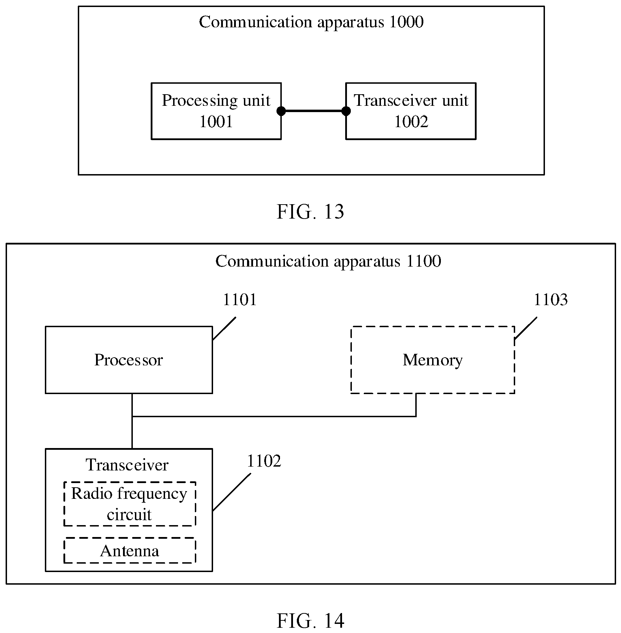

FIG. 13 is a schematic diagram of a communication apparatus 1000 according to an embodiment of this application. The communication apparatus 1000 includes a processing unit 1001 and a transceiver unit 1002.

Specifically, the communication apparatus 1000 may be a radio frame sending apparatus, configured to implement the radio frame sending method in any one of the foregoing embodiments. Correspondingly, the processing unit 1001 and the transceiver unit 1002 perform the following operations.

The processing unit 1001 generates a radio frame, where the radio frame includes one first element, and further includes at least one of a second element and a third element.

The first element includes a first length field and a first information portion following the first length field. The first information portion includes a first indication field and a first subelement, and the first subelement includes a first indication subfield and a first information field.

The second element includes a second length field and a second information portion following the second length field. The second information portion includes a second indication field and a second subelement, and the second subelement includes a second indication subfield and a second information field.

The third element includes a third length field and a third information portion following the third length field. The third information portion includes a third indication field and a third subelement, and the third subelement includes a third indication subfield and a third information field.

Information with a total length of L octets to be sent in fragments is carried in the first information field, and is further carried in at least one of the second information field and the third information field.

A length of information carried in the first information field is K octets.

A length of information carried in the second information field is obtained by subtracting X octets, namely a sum of a quantity of octets of the second indication field and the second indication subfield, from a quantity of octets of the second information portion.

It should be understood that the second indication field and the second indication subfield herein are essentially a sum of all possible indication fields following the length field included in the second element. The second indication field and the second indication subfield may be collectively referred to as indication fields. In another implementation, only one of the second indication field and the second indication subfield may be present.

A length of information carried in the third information field is obtained by subtracting K octets, namely the length of the information carried in the first information field, from the total length of L octets; or

a length of information carried in the third information field is obtained by subtracting K octets, namely the length of the information carried in the first information field, from the total length of L octets, and then subtracting the length of the information carried in the second information field.

The transceiver unit 1002 sends the radio frame.

In another implementation, the communication apparatus 1000 may be specifically a radio frame receiving apparatus, configured to implement the radio frame sending method in any one of the foregoing embodiments. Correspondingly, the processing unit 1001 and the transceiver unit 1002 perform the following operations:

The transceiver unit 1002 is configured to receive the radio frame; and

the processing unit 1001 is further configured to obtain, based on the radio frame, the information with the total length of L octets sent in fragments.

In a specific implementation, the processing unit 1001 identifies an element ID in each of the first element, the second element, and/or the third element in the radio frame, to learn which the first information field, the second information field and/or the third information field in the first element, the second element and/the third element carry fragment information of a same information element, to concatenate the fragment information of the same information element, to obtain the complete information with L octets.

With reference to the radio frame shown in FIG. 8, the radio frame includes one first element (element 1), and further includes at least one of a second element (element 2) and a third element (element 3).

The first element (element 1) includes a first length field (length 11) and a first information portion (information 11) following the first length field (length 11). Certainly, an element identifier field (element ID 11) is further included before the first length field. The first information portion (information 11) includes a first indication field (for example, includes a subelement ID 12 and a length 12) and a first subelement (element 12). The first subelement (element 12) includes a first indication subfield (for example, an element ID 13 and a length 13) and a first information field (information 13).

It should be understood that both the first indication field and the first indication subfield herein are examples, and the first indication field and the first indication subfield may also be collectively referred to as all indication fields included in the first information portion. In an actual scenario, the first element may include only the first indication field or the first indication subfield. Certainly, the first element may further include another field, and even another element that is not used to transmit current fragment information, which are considered as the first indication field and/or the first indication subfield.

Similarly, if a second element is present, the second element (element 2) includes a second length field (length 21) and a second information portion (information 21) following the second length field (length 21). Certainly, an element identifier field (element ID 21) is further included before the first length field. The second information portion (information 21) includes a second indication field (for example, includes a subelement ID 22 and a length 22) and a second subelement (element 22). The second subelement (element 22) includes a second indication subfield (for example, element ID 23 and length 23) and a second information field (information 23).

It should be understood that both the second indication field and the second indication subfield herein are examples, and the second indication field and the second indication subfield may also be collectively referred to as all indication fields included in the second information portion. In an actual scenario, the second element may include only the second indication field or the second indication subfield. Certainly, the second element may further include another field, and even another element that is not used to transmit current fragment information is considered as the second indication field and/or the second indication subfield.

Similarly, if a third element is present, the third element (element 3) includes a third length field (length 31) and a third information portion (information 31) following the third length field (length 31). Certainly, an element identifier field (element ID 31) is further included before the third length field. The third information portion (information 31) includes a third indication field (for example, includes a subelement ID 32 and a length 32) and a third subelement (element 32). The third subelement (element 32) includes a third indication subfield (for example, an element ID 33 and a length 33) and a third information field (information 33).

It should be understood that both the third indication field and the third indication subfield herein are examples, and the third indication field and the third indication subfield may also be collectively referred to as all indication fields included in the third information portion. In an actual scenario, the third element may include only the third indication field or the third indication subfield. Certainly, the third element may further include another field, and even another element that is not used to transmit current fragment information, which are considered as the third indication field and/or the third indication subfield.

Information with a total length of L octets to be sent in fragments is carried in the first information field (information 13), and is further carried in at least one of the second information field (information 23) and the third information field (information 33).

In an implementation, the first subelement is an information element, and each of the second subelement and the third subelement is a fragment element.

Specifically, the first subelement includes an element identifier element ID, which is an ID of the information element of the to-be-fragmented information. Each of the second subelement and the third subelement includes an element ID, and a value of the element ID is 242, indicating that each of the second subelement and the third subelement is a fragment information element. In this case, the fragment element ID may also be referred to as a fragment ID (FID).

A value of the first length field is 255, indicating that a length of the first information portion is 255 octets. A length of the first indication field is A1 octets. As the example in FIG. 8, the first indication field includes the subelement ID 12 and the length 12, and each of the subelement ID 12 and the length 12 occupies one octet. In this case, A1 is 2 octets. A length of the first indication subfield is A2 octets. For example, as shown in FIG. 8, the first indication subfield includes the element ID 13 and the length 13, and each of the element ID 13 and the length 13 occupies one octet. In this case, A2 is 2 octets, and a length K of information carried in the first information field is 255-A1-A2=255-2-2=251 octets. It should be understood that the first indication field herein is only an example. In an implementation, there may be another possibility in different elements. For example, as shown in FIG. 8, after the length 11 and before the information 11 that are included in the element 1, another indication field that occupies A3 octets is further included. Therefore, the length of the information carried in the first information field, namely information 13 K=255-A1-A2-A3. For another example, after the subelement ID 12 and the length 12 carried in the information 11 of the element 1, and before the element 12, an element carrying another information element may be further included. A function of the element is different from that of the element 12, and the element is not used to carry fragment information. It is assumed that an octet occupied by the element is A4. In this case, the length of the information carried in the first information field, namely information 13 K=255-A1-A2-A3-A4. For another example, after the element ID 13 and the length 13, and before the information 13 that are carried in the element 12, an element ID extension field may be further included. An octet occupied by the element ID extension field is A5. In this case, the length of the information carried in the first information field, namely information 13 K=255-A1-A2-A3-A4-A5.

A value of the second length field is 255, indicating that the length of the second information portion is 255 octets. The length of the second indication field is X1 octets, the length of the first indication subfield is X2 octets, and the length of the information carried in the second information field is (255-X1-X2) octets.

For example, as shown in FIG. 8, the second indication field includes the subelement ID 22 and the length 22, and each of the subelement ID 22 and the length 22 occupies one octet. In this case, X1 is 2 octets. The length of the first indication subfield is X2 octets. For example, as shown in FIG. 8, the second indication subfield includes the element ID 23 and the length 23, and each of the element ID 23 and the length 23 occupies one octet. In this case, X2 is 2 octets, and the length of the information carried in the second information field is 255-X1-X2=255-2-2=251 octets. It should be understood that the first indication field herein is only an example. In an implementation, there may be another possibility in different elements. For example, as shown in FIG. 8, after the length 21 included in the element 2, and between the information 21 and the length 21, another indication field that occupies X3 octets is further included. In this case, the length of the information carried in the second information field, namely information 23 K=255-X1-X2-X3. Certainly, after the subelement ID 22 and the length 22, and before the element 22 that are carried in the information 21 of the second element for transmitting the fragment information, namely the element 2, the element carrying the another information element is not included. For another example, after the element ID 23 and the length 23 that are carried in the element 22, and before the information 23, an element ID extension field may be further included. An octet occupied by the element ID extension field is X4. In this case, the length of the information carried in the first information field, namely information 23 K=255-X1-X2-X3-X4.

The information to be sent in fragments is further carried in the second element. A quantity of the second elements is M, and a value of M is as follows:

$$M = \left\lfloor (L-K) / \left( \begin{array}{l} \text{Length of a second information portion indicated} \\ \text{by a second length indication field} - X \end{array} \right) \right\rfloor,$$

where ⌊ ⌋ indicates rounding down.

In an implementation, if the length of the second information portion indicated by the second indication field is equal to 255 octets, the quantity of second elements $M = \left\lfloor (L-K)/(255-X) \right\rfloor$.

It should be understood that when the value of M is 1, it indicates that there is only one second element.

A quantity of third elements

$$N = \begin{cases} 1, \text{ if } (L-K) \bmod \left( \begin{array}{l} \text{Length of a second information portion indicated} \\ \text{by a second length indication field} - X \end{array} \right) > 0 \\ 0, \text{ else} \end{cases}$$

or

$$N = \begin{cases} 0, \text{ if } (L-K) \bmod \left( \begin{array}{l} \text{Length of a second information portion indicated} \\ \text{by a second indication field} - X \end{array} \right) = 0 \\ 1, \text{ else} \end{cases}.$$

In an implementation, if the length of the second information portion indicated by the second indication field is equal to 255 octets, the quantity of third elements

$$N = \begin{cases} 1, \text{ if } (L-K) \bmod (255-X) > 0 \\ 0, \text{ else} \end{cases}$$

or

$$N = \begin{cases} 0, \text{ if } (L-K) \bmod (255-X) = 0 \\ 1, \text{ else} \end{cases}.$$

It should be understood that when the value of N is 0, it indicates that the third element is not present.

It should be further understood that the value of M may be 0, and the value of N is 1, indicating that except the first element, only another element is used to transmit the fragment information, and a length of an information portion carried in the another element is less than 255-X.

When the third element is present, the length of the information carried in the third information field is L-K-(Length of the second information portion indicated by the second indication field-X)×M octets.

In an implementation, if the length of the second information portion indicated by the second indication field is equal to 255 octets, the length of the information carried in the third information field is L-K-(255-X)×M octets.

In a specific implementation, each of the first element, the second element, and/or the third element may be a multiple BSSID element, or may be a neighbor report element.

In implementing embodiments of this application, a plurality of elements may carry information that is not completely carried in one element. Some fixed indication overheads in the element are fully considered to remove from a length of an information portion for carrying the information. In this way, the information can be correctly carried in fragments, and no parsing error occurs at a receive end.

It should be noted that the communication apparatus 1000 may be further configured to perform the foregoing other embodiments in FIG. 1 to FIG. 12, and achieve corresponding beneficial effects. For details, refer to descriptions in the foregoing embodiments. Details are not described herein.

FIG. 14 is a schematic diagram of a structure of a communication apparatus 1100 according to an embodiment of this application. The communication apparatus 1100 includes a processor 1101 and a transceiver 1102.

The communication apparatus 1100 may be a radio frame sending apparatus, a radio frame receiving apparatus, or a chip in the radio frame sending apparatus or the radio frame receiving apparatus.

FIG. 14 shows only a main component of the communication apparatus 1100. In addition to the processor 1101 and the transceiver 1102, the communication apparatus may further include a memory 1103 and an input/output apparatus (not shown in the figure).

The processor 1101 is mainly configured to: process a communication protocol and communication data, control the entire communication apparatus, execute a software program, and process data of the software program. The memory 1103 is mainly configured to store the software program and the data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

The processor 1101, the transceiver 1102, and the memory 1103 may be connected through a communication bus.

After the communication apparatus is powered on, the processor 1101 may read the software program in the memory 1103, interpret and execute instructions of the software program, and process the data of the software program. When data is to be sent wirelessly, the processor 1101 performs baseband processing on the to-be-sent data, and then outputs a baseband signal to the radio frequency circuit. The radio frequency circuit performs radio frequency processing on the baseband signal, and then sends the radio frequency signal in the form of the electromagnetic wave through the antenna. When data is sent to the communication apparatus, the radio frequency circuit receives the radio frequency signal through the antenna, converts the radio frequency signal into the baseband signal, and outputs the baseband signal to the processor 1101. The processor 1101 converts the baseband signal into data, and processes the data.

In any one of the foregoing implementations, the processor 1201 may include a communication interface for implementing receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1201 may store instructions. The instructions may be a computer program. The computer program is run on the processor 1201, so that the communication apparatus 1200 performs the method described in any one of the foregoing embodiments. The computer program may be built in the processor 1201. In this case, the processor 1201 may be implemented by hardware.

In an implementation, the communication apparatus 1200 may include a circuit, and the circuit may implement a sending, receiving, or communication function in any one of the foregoing embodiments. The processor and communication interface described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and communication interface may be manufactured using various IC technologies, for example, a complementary metal oxide semiconductor (complementary metal oxide semiconductor, CMOS), an N-channel metal-oxide-semiconductor (N-channel metal-oxide-semiconductor, NMOS), a positive-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus may be an independent device or may be a part of a large device. For example, the communication apparatus may be:

(1) an independent integrated circuit IC, a chip, or a chip system or a subsystem;
(2) a set of one or more ICs, optionally, where the IC set may also include a storage component configured to store data and instructions;
(3) an ASIC such as a modem (Modem);
(4) a module that can be embedded in another device;
(5) a receiver, an intelligent terminal, a wireless device, a handset, a mobile unit, a vehicle-mounted device, a cloud device, an artificial intelligence device, and the like; and
(6) others.

In addition, the processor 1101 may be configured to perform, for example, but not limited to, baseband related processing; and the transceiver 1102 may be configured to perform, for example, but not limited to, radio frequency receiving and sending. The foregoing components may be disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With the continuous development of integrated circuit technologies, more components may be integrated on a same chip. For example, the digital baseband processor and a plurality of application processors (for example, but not limited to, a graphics processing unit and a multimedia processor) may be integrated on a same chip. The chip may be referred to as a system on chip (system on chip). Whether the components are separately disposed on different chips or integrated and disposed on one or more chips usually depends on a specific requirement of a product implementation. A specific implementation of the foregoing component is not limited in this embodiment of the present invention.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receiving circuit, to enable the apparatus to perform the method in any one of the foregoing embodiments.

An embodiment of this application further provides a WLAN communication system, including a radio frame sending apparatus and a radio frame receiving apparatus. The radio frame sending apparatus and the radio frame receiving apparatus may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other form well-known in the art. For example, the storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a core network interface device. Certainly, each of the processor and the storage medium may exist in the core network interface device as a discrete component.

A person skilled in the art shall be aware that, in the foregoing one or more examples, functions described in this application may be implemented by hardware, software, firmware, or any combination thereof. When the functions are implemented by software, these functions may be stored in a computer-readable medium or transmitted as one or more instructions or code in the computer-readable medium. The computer-readable medium includes a computer-readable storage medium and a communication medium. The communication medium includes any medium that facilitates transmission of a computer program from one place to another place. The storage medium may be any available medium accessible to a general-purpose or a dedicated computer.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, the word "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce good effect.

The objectives, technical solutions, and beneficial effects of this application are further described in detail in the foregoing specific implementations. It should be understood that the foregoing descriptions are only specific implementations of this application, but are not intended to limit the protection scope of this application. Any modification, equivalent replacement, improvement, or the like made based on the technical solutions of this application shall fall within the protection scope of this application.

**Claims**

1. A radio frame sending method, comprising:

   generating a radio frame, wherein the radio frame comprises one first element, and further comprises at least one of a second element and a third element;
   the first element comprises a first length field and a first information portion following the first length field, the first information portion comprises a first indication field and a first subelement, and the first subelement comprises a first indication subfield and a first information field;

the second element comprises a second length field and a second information portion following the second length field, the second information portion comprises a second indication field and a second subelement, and the second subelement comprises a second indication subfield and a second information field;

the third element comprises a third length field and a third information portion following the third length field, the third information portion comprises a third indication field and a third subelement, and the third subelement comprises a third indication subfield and a third information field;

information with a total length of L octets to be sent in fragments is carried in the first information field, and is further carried in at least one of the second information field and the third information field;

a length of information carried in the first information field is K octets;

a length of information carried in the second information field is obtained by subtracting X octets, namely a sum of a quantity of octets of the second indication field and the second indication subfield, from a quantity of octets of the second information portion; and

a length of information carried in the third information field is obtained by subtracting the length of the information carried in the first information field from the total length of L octets; or

a length of information carried in the third information field is obtained by subtracting the length of the information carried in the first information field from the total length of L octets, and then subtracting the length of the information carried in the second information field; and

sending the radio frame.

2. A radio frame receiving method, comprising:

receiving a radio frame, wherein the radio frame comprises one first element, and further comprises at least one of a second element and a third element;

the first element comprises a first length field and a first information portion following the first length field, the first information portion comprises a first indication field and a first subelement, and the first subelement comprises a first indication subfield and a first information field;

the second element comprises a second length field and a second information portion following the second length field, the second information portion comprises a second indication field and a second subelement, and the second subelement comprises a second indication subfield and a second information field;

the third element comprises a third length field and a third information portion following the third length field, the third information portion comprises a third indication field and a third subelement, and the third subelement comprises a third indication subfield and a third information field;

information with a total length of L octets to be sent in fragments is carried in the first information field, and is further carried in at least one of the second information field and the third information field;

a length of information carried in the first information field is K octets;

a length of information carried in the second information field is obtained by subtracting X octets, namely a sum of a quantity of octets of the second indication field and the second indication subfield, from a total quantity of octets of the second information portion; and

a length of information carried in the third information field is obtained by subtracting the length of the information carried in the first information field from the total length of L octets; or

a length of information carried in the third information field is obtained by subtracting the length of the information carried in the first information field from the total length of L octets, and then subtracting the length of the information carried in the second information field; and

obtaining, based on the radio frame, the information with the total length of L octets sent in fragments.

3. The method according to claim 1 or 2, wherein the first subelement is an information element, and each of the second subelement and the third subelement is a fragment element.

4. The method according to any one of claims 1 to 3, wherein the first subelement comprises an element identifier element ID, each of the second subelement and the third subelement comprises an element ID, and a value of the element ID is 242, indicating that each of the second subelement and the third subelement is a fragment information element.

5. The method according to any one of claims 1 to 3, wherein a value of the first length field is 255, indicating that a length of the first information portion is 255 octets, a length of the first indication field is A1 octets, a length of the first indication subfield is A2 octets, and the length K of the information carried in the first information field is 255-A1-A2 octets.

6. The method according to any one of claims 1 to 3, wherein a value of the second length field is 255, indicating that the length of the second information portion is 255 octets, the length of the second indication field is X1 octets, the length of the first indication subfield is X2 octets, X=X1+X2, and the length of the information carried in the second information field is (255-X) octets.

7. The method according to any one of claims 1 to 3, wherein a quantity of second elements

$$M = \left\lfloor (L-K)/\left(\begin{array}{l}\text{Length of a second information portion indicated} \\ \text{by a second length indication field}-X\end{array}\right)\right\rfloor,$$

and $\lfloor \rfloor$ represents rounding down.

8. The method according to any one of claims 1 to 3, wherein a quantity of third elements

$$N = \begin{cases} 1, \text{ if } (L-K) \bmod \left(\begin{array}{l}\text{Length of a second information portion indicated} \\ \text{by a second length indication field}-X\end{array}\right) > 0 \\ 0, \text{ else} \end{cases}$$

or

$$N = \begin{cases} 0, \text{ if } (L-K) \bmod \left(\begin{array}{l}\text{Length of a second information portion indicated} \\ \text{by a second indication field}-X\end{array}\right) = 0 \\ 1, \text{ else} \end{cases}.$$

9. The method according to claim 7 or 8, wherein the length of the information carried in the third information field is L-K-(Length of the second information portion indicated by the second indication field-X)×M octets.

10. The method according to any one of claims 1 to 8, wherein each of the first element, the second element, and the third element is a multiple BSSID element multiple BSSID element, and X=5.

11. A radio frame sending apparatus, wherein the apparatus comprises a transceiver unit and a processing unit, and the apparatus is configured to perform the method according to any one of claim 1 and claims 3 to 10.

12. A radio frame receiving apparatus, wherein the apparatus comprises a transceiver unit and a processing unit, and the apparatus is configured to perform the method according to any one of claims 2 to 10.

13. A communication apparatus, comprising at least one processor coupled to a memory, wherein

the memory is configured to store a program or instructions; and
the at least one processor is configured to execute the program or the instructions, so that the apparatus performs the method according to any one of claims 1 to 10.

14. A computer program product comprising program instructions, wherein when the program instructions are run on a computer, the computer is enabled to perform the method according to any one of claims 1 to 10.

15. A computer-readable storage medium, wherein the computer-readable storage medium stores program instructions, and when the program instructions are run, the method according to any one of claims 1 to 10 is performed.

FIG. 1

FIG. 2

| Element identifier | Length | Element identifier extension | Multi-link control | Common information | Link information |
|---|---|---|---|---|---|

| Element ID (=255) | Length | Element ID Extension | Multi-Link Control | Common Info | Link Info |
|---|---|---|---|---|---|

| Per-STA Profile 1 Per-station profile 1 | ... | Per-STA Profile x Per-station profile x |
|---|---|---|

| Subelement ID (=0) | Length Length | Data Data |
|---|---|---|

Subelement identifier

| STA Control Station control | STA Info Station information | STA Profile Station profile |
|---|---|---|

| Field 1 Field 1 | ... | Field m Field m | Element 1 Element 1 | ... | Element n Element n | Non-Inheritance Element (if present) |
|---|---|---|---|---|---|---|

Non-inheritance element (if present)

FIG. 3

EP 4 369 847 A1

Multiple basic service set identifier elements in a same frame (Multiple BSSID elements in a same frame)

| Element identifier | Length | Maximum BSSID indicator | Nontransmitted BSSID profile subelement (BSS 1) | Nontransmitted BSSID profile subelement (BSS i) | Element identifier | Length | Maximum BSSID indicator | Nontransmitted BSSID profile subelement (BSS i) | Nontransmitted BSSID profile subelement (BSS i+1) |
|---|---|---|---|---|---|---|---|---|---|
| Element ID (=71) | Length | MaxBSSID Indicator | Nontransmitted BSSID Profile subelement (BSS 1) | Nontransmitted BSSID Profile subelement (BSS i) | Element ID (=71) | Length | MaxBSSID Indicator | Nontransmitted BSSID Profile subelement (BSS i) | Nontransmitted BSSID Profile subelement (BSS i+1) |

0 or more Nontransmitted Profiles

0 or more nontransmitted BSSID profiles

0 or more Nontransmitted Profiles

0 or more nontransmitted BSSID profiles

| Subelement identifier | Length | Data |
|---|---|---|
| Subelement ID (=0) | Length | Data |

| Subelement identifier | Length | Data |
|---|---|---|
| Subelement ID (=0) | Length | Data |

| Nontransmitted BSSID Capability element | SSID element | Multiple BSSID-Index element | Element 1 | ... | Element L |
|---|---|---|---|---|---|

| Element L+1 | ... | Element Y | ... | Non-Inheritance element (if present) |
|---|---|---|---|---|

Nontransmitted BSSID capability element

Service set identifier element

Multiple BSSID-index element

Element 1

Element L

Element L+1

Element Y

Non-inheritance element (if present)

Nontransmitted BSSID profile i (Nontransmitted BSSID Profile i)

FIG. 4

EP 4 369 847 A1

*L* octets

255 octets | 255 octets | m octets

Data

Data | Data | Data

| EID | 255 | Data | FID | 255 | Data | FID | m | Data |

EID: The element ID of the fragmented element
FID: The Fragment element ID
m: *L* mod 255

EID: element identifier of a fragmented element
FID: fragment element identifier
octets: octets
data: data

FIG. 5

*L* octets

254 octets | 255 octets | m octets

Data

Data | Data | Data

EID | 255 | EX | Data | FID | 255 | Data | FID | m | Data

EID: The element ID of the fragmented element
EX: The element ID extension of the fragmented element
FID: The Fragment element ID
m: ($L$–254) mod 255 (The dashed Fragment element is present when ($L$–254) mod 255 is not equal to 0)

octets: octets
data: data
EID: element identifier of a fragmented element
EX: element identifier extension of the fragmented element
FID: fragment element identifier
m: (L–254) mod 255  (the fragment element is present when (L–254) mod 255 is not equal to 0)

FIG. 6

EP 4 369 847 A1

| frame control Frame control | duration Duration | ... | element Element (ID=A) | multiple BSSID element Multiple BSSID element (ID=71) | element Element (ID=B) |
|---|---|---|---|---|---|

| element ID Element identifier (ID=71) | length Length (=255) | MaxBSSID indicator Maximum BSSID indicator | nontransmitted BSSID profile 1 Nontransmitted BSSID profile 1 |
|---|---|---|---|

| subelement ID Subelement ID | length Length | nontransmitted BSSID capacity Nontransmitted BSSID capacity (ID=83) | Service set identifier SSID (ID=0) | multiple BSSID index Multiple BSSID index (ID=85) | element 1 Element 1 | ... | element i Element i |
|---|---|---|---|---|---|---|---|

| element ID Element identifier | length Length (=254) | element ID extension Element identifier extension | data Data |
|---|---|---|---|

FIG. 7

FIG. 8

Radio frame
sending apparatus

Radio frame
receiving apparatus

S101: Generate a radio frame

S102: Send the radio frame

S103: Receive the radio
frame

FIG. 9

| element ID<br>Element<br>identifier | length<br>Length | fragmented data<br>Fragmented data |
|---|---|---|

Octets:          1                 1             variable

Octets                                   Variable

FIG. 10

| Frame Control | Duration | ... | Element (ID=A) | Element (ID=B) | Multiple BSSID element (ID=71) |
|---|---|---|---|---|---|

| Element ID (=71) | Length (=255) | MaxBSSID Indicator | Nontransmitted BSSID profile |
|---|---|---|---|

| Subelement ID | Length | Nontransmitted BSSID capability (ID=83) | SSID (ID=0) | Multiple BSSID-Index (ID=85) | Element 1 | ... | Element I (Portion 1) |
|---|---|---|---|---|---|---|---|

| Element ID | Length (=K+1 or K) | Element ID Extension | Information/ Data |
|---|---|---|---|

Frame control: frame control
Duration: duration
Multiple BSSID element: multiple BSSID element
Length: length
MaxBSSID indicator: maximum BSSID indicator
Nontransmitted BSSID profile: nontransmitted BSSID profile
Nontransmitted BSSID capability: nontransmitted BSSID capability
SSID: service set identifier
Element ID extension: element identifier extension
Information/data: information/data
Portion: portion

~
TO
FIG. 11B

FIG. 11A

| Multiple BSSID element (ID=71) | Multiple BSSID element (ID=71) |
|---|---|

| Element ID (=71) | Length (=255) | MaxBSSID Indicator | Nontransmitted BSSID profile | Element ID (=71) | Length (=255) | MaxBSSID Indicator | Nontransmitted BSSID profile |
|---|---|---|---|---|---|---|---|

| Subelement ID | Length | Element I (Portion 2) | Subelement ID | Length | Element I (Portion 3) |
|---|---|---|---|---|---|

| Element ID (=242) | Length (=250) | Information/Data | Element ID (=242) | Length (=250) | Information/Data |
|---|---|---|---|---|---|

CONT. FROM FIG. 11A
~

TO FIG. 11C
~

| Information/Data (k Octets) | Information/Data (250 Octets) | Information/Data (250 Octets) | Information/Data (m Octets) |
|---|---|---|---|

← L Octets →

FIG. 11B

EP 4 369 847 A1

| Multiple BSSID element (ID=71) | Element (ID=C) | Element (ID=D) | Element (ID=E) |
|---|---|---|---|

| Element ID (=71) | Length (=255) | MaxBSSID Indicator | Nontransmitted BSSID profile |
|---|---|---|---|

| Subelement ID | Length | Element I (Portion 4) | Element I+1 | ... |
|---|---|---|---|---|

| Element ID (=242) | Length (=m) | Information/Data |
|---|---|---|

CONT.
FROM
FIG. 11B

FIG. 11C

| element ID<br>Element identifier | length<br>Length | BSSID<br>Basic service set identifier | BSSID information<br>Basic service set identifier information | operating class<br>Operating class | channel number<br>Channel number | PHY Type<br>Physical type | optional subelements<br>Operating subelements |
|---|---|---|---|---|---|---|---|
| 1 | 1 | 6 | 4 | 1 | 1 | 1 | variable<br>Variable |

Octets:<br>Octets

FIG. 12

Communication apparatus 1000

| Processing unit 1001 | Transceiver unit 1002 |

FIG. 13

Communication apparatus 1100

1101

Processor

1103

Memory

1102

Transceiver

Radio frequency circuit

Antenna

FIG. 14

## INTERNATIONAL SEARCH REPORT

| International application No. |
| --- |
| **PCT/CN2022/109459** |

**A. CLASSIFICATION OF SUBJECT MATTER**

H04W 76/15(2018.01)i

According to International Patent Classification (IPC) or to both national classification and IPC

**B. FIELDS SEARCHED**

Minimum documentation searched (classification system followed by classification symbols)

H04W76/-

Documentation searched other than minimum documentation to the extent that such documents are included in the fields searched

Electronic data base consulted during the international search (name of data base and, where practicable, search terms used)

CNABS; CNTXT; CNKI: 元素, 帧, 报文, 子元素, 第二, 多个, 嵌套, 长度, 字段, 多链路; DWPI; SIPOABS; EPTXT; WOTXT; USTXT; 3GPP: frame, multi-link, element, subelement, length, field, MLE, MLD, multiple BSSID element, second, several

**C. DOCUMENTS CONSIDERED TO BE RELEVANT**

| Category* | Citation of document, with indication, where appropriate, of the relevant passages | Relevant to claim No. |
| --- | --- | --- |
| X | US 2021212150 A1 (NXP USA, INC.) 08 July 2021 (2021-07-08) description, paragraphs [0068] and [0072]-[0073] | 1-6, 10-15 |
| A | CN 112469069 A (MEDIATEK INC.) 09 March 2021 (2021-03-09) entire document | 1-15 |
| A | CN 112788716 A (HUAWEI TECHNOLOGIES CO., LTD.) 11 May 2021 (2021-05-11) entire document | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 October 2022** | **27 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| Patent document<br>cited in search report | | | Publication date<br>(day/month/year) | Patent family member(s) | | | Publication date<br>(day/month/year) |
|---|---|---|---|---|---|---|---|
| US | 2021212150 | A1 | 08 July 2021 | None | | | |
| CN | 112469069 | A | 09 March 2021 | TW | 202112176 | A | 16 March 2021 |
| | | | | US | 2021076249 | A1 | 11 March 2021 |
| | | | | EP | 3790342 | A1 | 10 March 2021 |
| CN | 112788716 | A | 11 May 2021 | WO | 2021089022 | A1 | 14 May 2021 |
| | | | | AU | 2020379794 | A1 | 19 May 2022 |
| | | | | KR | 20220085829 | A | 22 June 2022 |

International application No.

**PCT/CN2022/109459**

Form PCT/ISA/210 (patent family annex) (January 2015)